# EUROPEAN PATENT APPLICATION

(11) **EP 4 560 348 A1**
(43) Date of publication of application: **28.05.2025**
(21) Application number: 24214336.0
(22) Date of filing: 20.11.2024
(51) Int. Cl.: G01S 7/02, G01S 13/931

(54) **UNIVERSAL SPECTRUM UTILIZATION EXCHANGE FOR RADIO FREQUENCY INTERFERENCE MITIGATION AND AVOIDANCE**

(30) Priority: 22.11.2023 US 202318517438
(71) Applicant: WAYMO LLC, Mountain View, CA 94043 (US)
(72) Inventor: FINA, Michael Dane, Mountain View, 94043 (US); PERICH, Filip, Mountain View, 94043 (US); HO, Kenneth T., Mountain View, 94043 (US)
(74) Representative: Anderson, Oliver Ben

(57) **Abstract**

Example embodiments relate to techniques and systems for exchanging spectrum utilization data for radio frequency interference (RFI) mitigation and avoidance. A system can receive RFI data and location data from vehicles or infrastructure locations with the RFI data representing RFI parameters estimated by each vehicle during navigation or by each infrastructure location. The system can aggregate the RFI data into a representation based on the location data with the representation conveying a power level and frequency sub-band for RFI detected at multiple locations. The system can then obtain subsequent locations from vehicles and provide data from the representation to the vehicles based on the locations. In some cases, the system can also provide mitigation instructions to vehicles, such as waveform parameters, frequency bands, polarization, and other adjustments that help avoid RFI. The system can also reroute vehicles to avoid areas with particularly high RFI.

## Description

### BACKGROUND

Automotive radar involves using radio frequency (RF) to detect the presence, distance, direction, and speed of objects in the surrounding environment of a vehicle. The vehicle radar system emits a radio signal from a transmitter, which then bounces off nearby objects and returns to a receiver. By analyzing the characteristics of the returned signal, the vehicle radar system can determine the location, speed, and direction of objects located in the environment, such as other vehicles, pedestrians, road boundaries, and obstacles. In some cases, radar data is used by a vehicle's advanced driver assistance systems (ADAS) or Automated Driving Systems (ADS) to provide warnings to the driver or even take autonomous actions to avoid collisions. In other cases, a vehicle control system uses radar data when determining a control strategy for autonomous navigation by the vehicle.

### SUMMARY

Example embodiments relate to techniques and systems for exchanging spectrum utilization data to enable the aggregation of radio frequency interference (RFI) data from different sources and locations. Vehicles and other systems measure RFI experienced at various locations and estimate RFI information describing signal characteristics of the RFI. The vehicles and other systems (e.g., infrastructure locations) provide the RFI information and location data to a remote central system, which aggregates the RFI information to generate an RFI map or another representation that conveys RFI data at multiple locations in near real-time. The central system can distribute the RFI map or representation for use by vehicle radar systems and other emitters to mitigate and avoid RFI during signal transmission. In some examples, vehicles may act similar to the remote central system and aggregate RFI information from other sources to determine mitigation strategies during navigation. Vehicles can aggregate RFI information in a decentralized manner from other nearby sources, which can be used onboard by vehicle systems and also contributed to a central system for further processing.

In one aspect, a method is described. The method involves receiving, at a computing system, radio frequency interference (RFI) data and location data from one or more vehicles or infrastructure locations, the RFI data representing RFI parameters estimated by each vehicle during navigation or by each infrastructure location. The method also involves aggregating, based on the location data, the RFI data to generate a representation that indicates a power level and a frequency sub-band for RFI detected at one or more locations. The method also involves obtaining, at the computing system, a location from a vehicle and providing, by the computing system and to the vehicle, at least a portion of the representation based on the location of the vehicle.

In another aspect, a system is described. The system also includes a computing device. The computing device is configured to receive radio frequency interference (RFI) data and location data from one or more vehicles or infrastructure locations, the RFI data representing RFI parameters estimated by each vehicle during navigation or by each infrastructure location. The computing device is further configured to aggregate, based on the location data, the RFI data to generate a representation that indicates a power level and a frequency sub-band for RFI detected at one or more locations. The computing device is also configured to obtain a location from a vehicle and provide, to the vehicle, at least a portion of the representation based on the location of the vehicle.

In yet another aspect, a non-transitory computer-readable medium is described. The non-transitory computer-readable medium is configured to store instructions, that when executed by a computing system comprising one or more processors, causes the computing system to perform operations. The operations involve receiving radio frequency interference (RFI) data and location data from one or more vehicles or infrastructure locations, the RFI data representing RFI parameters estimated by each vehicle during navigation or by each infrastructure location. The operations also involve aggregating, based on the location data, the RFI data to generate a representation that indicates a power level and a frequency sub-band for RFI detected at one or more locations. The operations also involve obtaining a location from a vehicle and providing, to the vehicle, at least a portion of the representation based on the location of the vehicle.

These as well as other aspects, advantages, and alternatives will become apparent to those of ordinary skill in the art by reading the following detailed description, with reference, where appropriate, to the accompanying drawings.

### BRIEF DESCRIPTION OF THE DRAWINGS

Figure 1 is a functional block diagram illustrating a vehicle, according to example embodiments.
Figure 2A is an illustration of a physical configuration of a vehicle, according to example embodiments.
Figure 2B is an illustration of a physical configuration of a vehicle, according to example embodiments.
Figure 2C is an illustration of a physical configuration of a vehicle, according to example embodiments.
Figure 2D is an illustration of a physical configuration of a vehicle, according to example embodiments.
Figure 2E is an illustration of a physical configuration of a vehicle, according to example embodiments.
Figure 2F is an illustration of a physical configuration of a vehicle, according to example embodiments.
Figure 2G is an illustration of a physical configuration of a vehicle, according to example embodiments.
Figure 2H is an illustration of a physical configuration of a vehicle, according to example embodiments.
Figure 2I is an illustration of a physical configuration of a vehicle, according to example embodiments.
Figure 2J is an illustration of a field of view for various sensors, according to example embodiments.
Figure 2K is an illustration of beam steering for a sensor, according to example embodiments.
Figure 3 is a conceptual illustration of wireless communication between various computing systems related to an autonomous or semi-autonomous vehicle, according to example embodiments.
Figure 4 is a block diagram of a system including a radar unit, according to example embodiments.
Figure 5 is a block diagram of a system for universal spectrum utilization exchange for RFI mitigation and avoidance, according to example embodiments.
Figure 6 is a flowchart of a method for universal spectrum utilization exchange for RFI mitigation and avoidance, according to example embodiments.

### DETAILED DESCRIPTION

Example methods and systems are contemplated herein. Any example embodiment or feature described herein is not necessarily to be construed as preferred or advantageous over other embodiments or features. Further, the example embodiments described herein are not meant to be limiting. It will be readily understood that certain aspects of the disclosed systems and methods can be arranged and combined in a wide variety of different configurations, all of which are contemplated herein. In addition, the particular arrangements shown in the figures should not be viewed as limiting. It should be understood that other embodiments might include more or less of each element shown in a given figure. Additionally, some of the illustrated elements may be combined or omitted. Yet further, an example embodiment may include elements that are not illustrated in the figures.

Vehicles are increasingly incorporating radar systems for obstacle detection and avoidance and to measure road conditions and other aspects of dynamic environments encountered during navigation. Many vehicle radar systems are designed to operate within an automotive RF band, which is within 5 Gigahertz (GHz) of a spectral region that extends between 76 GHz and 81 GHz, inclusive. Although the spectral region can offer sufficient bandwidth to accommodate a single vehicle radar system (i.e., 5 GHz), RF interference (RFI) can arise and cause issues when multiple vehicle radar systems are operating on the same frequency or similar frequencies in the same general location and/or use wide bandwidth (high range resolution) modulations. For each vehicle radar system, RFI can make it difficult to differentiate between desired reflections of signals transmitted by the vehicle radar system and other RF signals that originate from other nearby emitters (e.g., other vehicle radar systems), which can decrease a vehicle radar system's ability to accurately measure aspects of the surrounding environment. With more vehicles incorporating radar, vehicle radar systems are increasingly likely to encounter RFI during navigation, especially within city limits and other areas that typically have more vehicles navigating close together and in multiple directions (e.g., at intersections).

For example, consider a scenario where a vehicle equipped with radar is driving in an urban area surrounded by numerous electronic devices, Wi-Fi networks, and cell towers. These sources emit a wide range of radio frequency signals, some of which might overlap with the frequencies used by the vehicle's radar system and cause radars on the vehicle to receive mixed reflections that can cause the radar system to incorrectly perceive obstacles or vehicles that are not actually present in the environment. As a result of receiving the mixed reflections, the radar system might trigger undesired actions by the vehicle control system, such as inappropriate braking, acceleration, or steering responses. In other cases, the radar system receiving the mixed reflections could lead to a condition where the vehicle control system determines that it is not capable to continue navigation and pulls the vehicle over or causes the vehicle to remain stationary. In general, RFI encountered during navigation can degrade signal quality and reduce the vehicle radar system's ability to detect objects and cause the vehicle's perception and behavior systems to misidentify or even fail to identify objects.

To combat the negative effects of RFI, vehicle radar systems can use mitigation techniques. For instance, shielding materials can be used to isolate vehicle radar components from externally emitted electromagnetic signals and filters can be used by the vehicle radar system to selectively process signals within its desired frequency range while rejecting unwanted frequencies. In addition, vehicle radar systems can also use signal processing algorithms that help distinguish genuine radar reflections from interference. These techniques, however, might not be enough for vehicle radar systems to overcome the negative effects of RFI, especially in situations when the vehicle is traveling in dense RF environments or areas with buildings or other stationary sources that can drastically increase the effects of RFI.

Examples described herein relate to techniques and systems for exchanging spectrum utilization data, which enables the aggregation, management, and distribution of RFI data detected and provided by different sources at various locations to help vehicle radar systems and other emitters mitigate and avoid the negative effects of RFI. By way of an example, a network-based computing system may aggregate RFI data in near-real time from vehicle radar systems during navigation and other sources in order to generate a RFI map or another type of representation that indicates the power levels and frequency sub-bands for RFI detected at various locations. The system can distribute the RFI representation to vehicle radar systems and other emitters to provide assistance with mitigating and avoiding RFI during subsequent operations.

In addition, the RFI representation can be maintained, updated, and monitored by the system. In some examples, the system may determine and associate threshold levels of RFI with different locations. For instance, the system may assign a power level threshold for RFI at a particular location based on power levels for RFI detected by vehicles at the location over time. Trends and other data can be used to assign threshold levels of RFI at the locations. When one or multiple vehicle radar systems (or other devices) provide RFI data indicating that the RFI intensity (e.g., power level) currently measured at a particular location exceeds a threshold RFI level associated with that location, the system may be programmed to perform one or multiple operations in response. For instance, the system may provide alerts to vehicles in a particular location when RFI exceeds a threshold level assigned to the level. In some cases, the system can provide mitigation instructions to vehicles having routes that travel through that location, such as suggested waveform and/or frequency parameters that can be used to reduce the impact of RFI at that area. The mitigation instructions can be determined based on incoming RFI data received from other vehicles and emitters at that location. For instance, the RFI data can specify the polarization, waveform, frequency band, and other transmission parameters used by the vehicles in that area. In turn, the system can identify available parameters that one or multiple radar systems can switch to using in order to reduce the effects of RFI at the location. In some cases, the system may provide instructions to vehicles that trigger the vehicles to change routes and avoid a particular location experiencing a high amount of RFI.

In some examples, the system can aggregate and use RFI and location information obtained from various sources to generate a real-time RFI "heat map" that represents spectral power in a set of sub-bands arranged according to locations. The RFI heat map can then be distributed to vehicles and third party sources by the system and updates to the RFI heat map can be provided thereafter to the same recipients. For instance, the system can divide and provide data representing portions of the RFI heat map that are selected by the system based on the locations of the vehicles and third party sources. In some cases, the system provides portions of the RFI heat map (or data from the RFI heat map) based on a route provided by a vehicle. In some cases, the RFI heat map associates numeric RFI intensity levels and waveform parameters with location coordinates.

The RFI heat map can be visually represented using different colors similar to a generic heat map at the various locations to represent the spectral power detected at the different locations. For instance, the RFI heat map can be a graphical representation of data where individual values are represented as colors. The RFI heat map can be useful for visualizing the distribution and density of data points within a two-dimensional (2D) space, such as a grid or map. The RFI heat map can be used to display patterns, trends, and variations in data by assigning different colors to different values. For instance, a color scale can be used to represent low RFI values detected at locations (e.g., blue or green) to high RFI values detected at locations (e.g., red or yellow) with varying shades of color in-between. In some cases, RFI data can be divided into smaller segments (cells) with each cell representing a specific region. The value associated with each cell determines the color that the system will assign to the RFI heat map. When presented in a visual format, the RFI heat map can include a legend that enables third parties to understand its content, such as which areas currently have high levels of RFI that can potentially interfere with radar performance.

Disclosed techniques involve vehicles providing RFI and location information to the system as the vehicles navigate various routes. In some examples, the RFI and location information includes data associated with each vehicle's own radar signals transmissions and external RFI detected and experienced by the vehicle's radar system. In other examples, the RFI and location information may only include data specifying transmission parameters and location data. Radar systems can provide information specifying frequency, signal strength, modulation, bandwidth, spectral distribution, polarization, and time characteristics about the observed RFI at a given location. In addition, the vehicles can provide data that indicates the interference type (e.g., continuous or intermittent), images of the potential RFI source, number of emitters, frequency/phase modulation patterns, and other information.

In some examples, the system uses aggregated RFI data and location information to provide data that can assist vehicles and other emitters mitigate RFI. For instance, each vehicle can download a data summary of emitters in its area, which can reveal locations, intensity, and waveform parameters that can assist the vehicle radar system adjust operations to increase accuracy in the area. In some cases, the system can provide data informing a vehicle about which sub-bands are available in an area and other electronic support measures for the vehicle to use to reduce the impact of RFI, such as articulating selection and/or sequence of waveform parameters. In other cases, the information may be converted to a reduced sensitivity estimate that may impact the ability to detect various objects on a by-radar-by-object-bearing basis and which can be applied to other downstream pipelines.

The system may use RFI data received from vehicle radar systems, infrastructure, and/or other sources to identify static, persistent elevated RFI sources (e.g., from non-radar RFI or from stationary vehicles such as at a depot) when elevated spectral power density exists at any number of fixed locations over time. For instance, the system can detect these static, persistent elevated RFI sources based on RFI data supplied by multiple vehicles over a period of time, such as the threshold period of time. The threshold period of time can differ based on location. In such cases, the temporal evolution of RFI in specific areas may be observed or learned for purposes of transferring information to vehicles or third-party sources. For vehicles, this may result in route re-planning in order to avoid static RFI sources which otherwise may affect the ability to maintain a level of vehicle autonomy. In some cases, third-party or regulatory bodies may be interested in the heat map or derived products of it. Specifically, third-party or regulatory bodies may want to understand the relationship with negative vehicle effects such as vehicle stranding that is related to radar power spectral density at the time of the incident.

In some examples, the system can coordinate operations among multiple vehicle radar systems. For instance, the central system can use trends in RFI data to provide instructions that allow individual radar systems to operate despite their routes overlapping in areas that can have high amounts of RFI. For instance, the system can coordinate and synchronize vehicle radars to all transmit in a particular geographic direction (e.g., geographic North) at a given time to reduce RFI among the vehicle radars. Similarly, different polarizations, waveform parameters, frequency bands, and/or other mitigation instructions can be provided by the system to allow vehicles to travel nearby each other while allowing the vehicle radar systems to operate accurately. The distribution of mitigation instructions by the system can depend on routes, geographic locations, and/or types of vehicle radar systems in some examples.

In some examples, individual vehicles can perform disclosed techniques. For instance, a vehicle can aggregate RFI data from other vehicles and infrastructure located within a threshold distance from the vehicle as the vehicle navigates. Vehicle systems can use the aggregated RFI data to understand RF in the surrounding environment and perform mitigation actions, such as changing waveform, polarization, frequency, timing, or other dimensions of radar transmissions. In some cases, the vehicle can reduce dependence on radar when RFI is particularly high in an area during navigation (e.g., above a threshold RFI level). For instance, vehicle systems can rely on other sensors until detecting RFI is back below the threshold RFI level. In addition, vehicle systems can also communicate the high level of RFI in a location with other nearby vehicles. Multiple vehicles can share aggregated RFI data with each other and build a representation in a decentralized manner in some examples. The vehicles and infrastructure can share RFI data based on location or other factors.

The following description and accompanying drawings will elucidate features of various example embodiments. The embodiments provided are by way of example, and are not intended to be limiting. As such, the dimensions of the drawings are not necessarily to scale.

In some examples, a system may facilitate vehicle-to-vehicle sharing that enables vehicles in the same general location to share RFI data directly. For instance, multiple vehicles traveling in the same neighborhood or along similar routes may be connected via the system to allow the vehicles to share RF transmission metadata and RFI metadata.

Example systems within the scope of the present disclosure will now be described in greater detail. An example system may be implemented in or may take the form of an automobile. Additionally, an example system may also be implemented in or take the form of various vehicles, such as cars, trucks (e.g., pickup trucks, vans, tractors, and tractor trailers), motorcycles, buses, airplanes, helicopters, drones, lawn mowers, earth movers, boats, submarines, all-terrain vehicles, snowmobiles, aircraft, recreational vehicles, amusement park vehicles, farm equipment or vehicles, construction equipment or vehicles, warehouse equipment or vehicles, factory equipment or vehicles, trams, golf carts, trains, trolleys, sidewalk delivery vehicles, and robot devices. Other vehicles are possible as well. Further, in some embodiments, example systems might not include a vehicle.

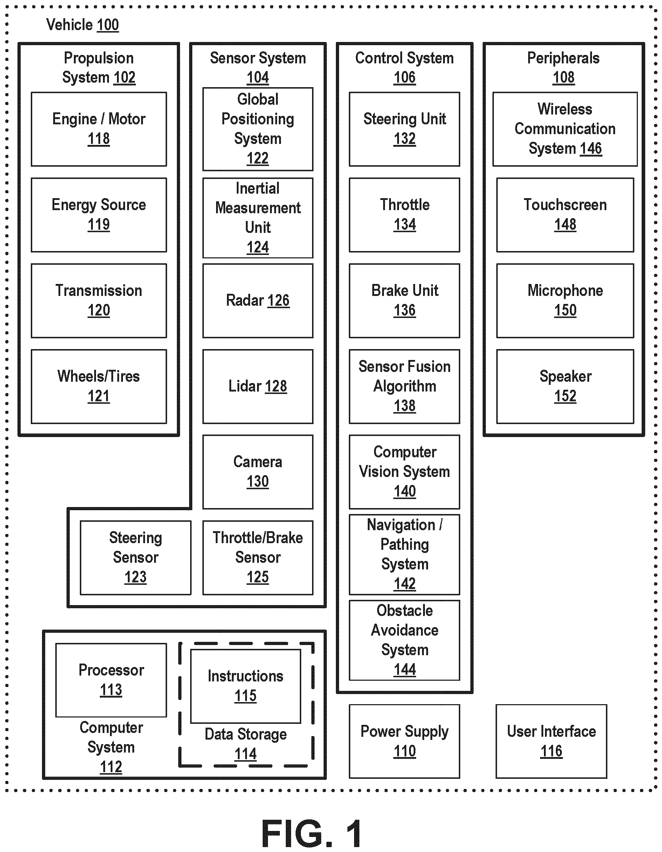

Referring now to the figures, Figure 1 is a functional block diagram illustrating example vehicle 100, which may be configured to operate fully or partially in an autonomous mode. More specifically, vehicle 100 may operate in an autonomous mode without human interaction through receiving control instructions from a computing system. As part of operating in the autonomous mode, vehicle 100 may use sensors to detect and possibly identify objects of the surrounding environment to enable safe navigation. Additionally, vehicle 100 may operate in a partially autonomous (i.e., semi-autonomous) mode in which some functions of the vehicle 100 are controlled by a human driver of the vehicle 100 and some functions of the vehicle 100 are controlled by the computing system. For example, vehicle 100 may also include subsystems that enable the driver to control operations of vehicle 100 such as steering, acceleration, and braking, while the computing system performs assistive functions such as lane-departure warnings / lane-keeping assist or adaptive cruise control based on other objects (e.g., vehicles) in the surrounding environment.

As described herein, in a partially autonomous driving mode, even though the vehicle assists with one or more driving operations (e.g., steering, braking and/or accelerating to perform lane centering, adaptive cruise control, advanced driver assistance systems (ADAS), and emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods are described below in conjunction with autonomous vehicles, these or similar systems and methods can be used in various driver assistance systems that do not rise to the level of fully autonomous driving systems (i.e. partially autonomous driving systems). In the United States, the Society of Automotive Engineers (SAE) have defined different levels of automated driving operations to indicate how much, or how little, a vehicle controls the driving, although different organizations, in the United States or in other countries, may categorize the levels differently. More specifically, the disclosed systems and methods can be used in SAE Level 2 driver assistance systems that implement steering, braking, acceleration, lane centering, adaptive cruise control, etc., as well as other driver support. The disclosed systems and methods can be used in SAE Level 3 driving assistance systems capable of autonomous driving under limited (e.g., highway) conditions. Likewise, the disclosed systems and methods can be used in vehicles that use SAE Level 4 self-driving systems that operate autonomously under most regular driving situations and require only occasional attention of the human operator. In all such systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

As shown in Figure 1, vehicle 100 may include various subsystems, such as propulsion system 102, sensor system 104, control system 106, one or more peripherals 108, power supply 110, computer system 112 (which could also be referred to as a computing system) with data storage 114, and user interface 116. In other examples, vehicle 100 may include more or fewer subsystems, which can each include multiple elements. The subsystems and components of vehicle 100 may be interconnected in various ways. In addition, functions of vehicle 100 described herein can be divided into additional functional or physical components, or combined into fewer functional or physical components within embodiments. For instance, the control system 106 and the computer system 112 may be combined into a single system that operates the vehicle 100 in accordance with various operations.

Propulsion system 102 may include one or more components operable to provide powered motion for vehicle 100 and can include an engine/motor 118, an energy source 119, a transmission 120, and wheels/tires 121, among other possible components. For example, engine/motor 118 may be configured to convert energy source 119 into mechanical energy and can correspond to one or a combination of an internal combustion engine, an electric motor, steam engine, or Stirling engine, among other possible options. For instance, in some embodiments, propulsion system 102 may include multiple types of engines and/or motors, such as a gasoline engine and an electric motor.

Energy source 119 represents a source of energy that may, in full or in part, power one or more systems of vehicle 100 (e.g., engine/motor 118). For instance, energy source 119 can correspond to gasoline, diesel, other petroleum-based fuels, propane, other compressed gas-based fuels, ethanol, solar panels, batteries, and/or other sources of electrical power. In some embodiments, energy source 119 may include a combination of fuel tanks, batteries, capacitors, and/or flywheels.

Transmission 120 may transmit mechanical power from engine/motor 118 to wheels/tires 121 and/or other possible systems of vehicle 100. As such, transmission 120 may include a gearbox, a clutch, a differential, and a drive shaft, among other possible components. A drive shaft may include axles that connect to one or more wheels/tires 121.

Wheels/tires 121 of vehicle 100 may have various configurations within example embodiments. For instance, vehicle 100 may exist in a unicycle, bicycle/motorcycle, tricycle, or car/truck four-wheel format, among other possible configurations. As such, wheels/tires 121 may connect to vehicle 100 in various ways and can exist in different materials, such as metal and rubber.

Sensor system 104 can include various types of sensors, such as Global Positioning System (GPS) 122, inertial measurement unit (IMU) 124, radar 126, lidar 128, camera 130, steering sensor 123, and throttle/brake sensor 125, among other possible sensors. In some embodiments, sensor system 104 may also include sensors configured to monitor internal systems of the vehicle 100 (e.g., O₂ monitor, fuel gauge, engine oil temperature, and brake wear).

GPS 122 may include a transceiver operable to provide information regarding the position of vehicle 100 with respect to the Earth. IMU 124 may have a configuration that uses one or more accelerometers and/or gyroscopes and may sense position and orientation changes of vehicle 100 based on inertial acceleration. For example, IMU 124 may detect a pitch and yaw of the vehicle 100 while vehicle 100 is stationary or in motion.

Radar 126 may represent one or more systems configured to use radio signals to sense objects, including the speed and heading of the objects, within the surrounding environment of vehicle 100. As such, radar 126 may include antennas configured to transmit and receive radio signals. In some embodiments, radar 126 may correspond to a mountable radar configured to obtain measurements of the surrounding environment of vehicle 100.

Lidar 128 may include one or more laser sources, a laser scanner, and one or more detectors, among other system components, and may operate in a coherent mode (e.g., using heterodyne detection) or in an incoherent detection mode (i.e., time-of-flight mode). In some embodiments, the one or more detectors of the lidar 128 may include one or more photodetectors, which may be especially sensitive detectors (e.g., avalanche photodiodes). In some examples, such photodetectors may be capable of detecting single photons (e.g., single-photon avalanche diodes (SPADs)). Further, such photodetectors can be arranged (e.g., through an electrical connection in series) into an array (e.g., as in a silicon photomultiplier (SiPM)). In some examples, the one or more photodetectors are Geiger-mode operated devices and the lidar includes subcomponents designed for such Geiger-mode operation.

Camera 130 may include one or more devices (e.g., still camera, video camera, a thermal imaging camera, a stereo camera, and a night vision camera) configured to capture images of the surrounding environment of vehicle 100.

Steering sensor 123 may sense a steering angle of vehicle 100, which may involve measuring an angle of the steering wheel or measuring an electrical signal representative of the angle of the steering wheel. In some embodiments, steering sensor 123 may measure an angle of the wheels of the vehicle 100, such as detecting an angle of the wheels with respect to a forward axis of the vehicle 100. Steering sensor 123 may also be configured to measure a combination (or a subset) of the angle of the steering wheel, electrical signal representing the angle of the steering wheel, and the angle of the wheels of vehicle 100.

Throttle/brake sensor 125 may detect the position of either the throttle position or brake position of vehicle 100. For instance, throttle/brake sensor 125 may measure the angle of both the gas pedal (throttle) and brake pedal or may measure an electrical signal that could represent, for instance, an angle of a gas pedal (throttle) and/or an angle of a brake pedal. Throttle/brake sensor 125 may also measure an angle of a throttle body of vehicle 100, which may include part of the physical mechanism that provides modulation of energy source 119 to engine/motor 118 (e.g., a butterfly valve and a carburetor). Additionally, throttle/brake sensor 125 may measure a pressure of one or more brake pads on a rotor of vehicle 100 or a combination (or a subset) of the angle of the gas pedal (throttle) and brake pedal, electrical signal representing the angle of the gas pedal (throttle) and brake pedal, the angle of the throttle body, and the pressure that at least one brake pad is applying to a rotor of vehicle 100. In other embodiments, throttle/brake sensor 125 may be configured to measure a pressure applied to a pedal of the vehicle, such as a throttle or brake pedal.

Control system 106 may include components configured to assist in the navigation of vehicle 100, such as steering unit 132, throttle 134, brake unit 136, sensor fusion algorithm 138, computer vision system 140, navigation/pathing system 142, and obstacle avoidance system 144. More specifically, steering unit 132 may be operable to adjust the heading of vehicle 100, and throttle 134 may control the operating speed of engine/motor 118 to control the acceleration of vehicle 100. Brake unit 136 may decelerate vehicle 100, which may involve using friction to decelerate wheels/tires 121. In some embodiments, brake unit 136 may convert kinetic energy of wheels/tires 121 to electric current for subsequent use by a system or systems of vehicle 100.

Sensor fusion algorithm 138 may include a Kalman filter, Bayesian network, or other algorithms that can process data from sensor system 104. In some embodiments, sensor fusion algorithm 138 may provide assessments based on incoming sensor data, such as evaluations of individual objects and/or features, evaluations of a particular situation, and/or evaluations of potential impacts within a given situation.

Computer vision system 140 may include hardware and software (e.g., a general purpose processor such as a central processing unit (CPU), a specialized processor such as a graphical processing unit (GPU) or a tensor processing unit (TPU), an application-specific integrated circuit (ASIC), a field programmable gate array (FPGA), a volatile memory, a non-volatile memory, or one or more machine-learned models) operable to process and analyze images in an effort to determine objects that are in motion (e.g., other vehicles, pedestrians, bicyclists, or animals) and objects that are not in motion (e.g., traffic lights, roadway boundaries, speedbumps, or potholes). As such, computer vision system 140 may use object recognition, Structure From Motion (SFM), video tracking, and other algorithms used in computer vision, for instance, to recognize objects, map an environment, track objects, estimate the speed of objects, etc.

Navigation/pathing system 142 may determine a driving path for vehicle 100, which may involve dynamically adjusting navigation during operation. As such, navigation/pathing system 142 may use data from sensor fusion algorithm 138, GPS 122, and maps, among other sources to navigate vehicle 100. Obstacle avoidance system 144 may evaluate potential obstacles based on sensor data and cause systems of vehicle 100 to avoid or otherwise negotiate the potential obstacles.

As shown in Figure 1, vehicle 100 may also include peripherals 108, such as wireless communication system 146, touchscreen 148, microphone 150 (e.g., one or more interior and/or exterior microphones), and/or speaker 152. Peripherals 108 may provide controls or other elements for a user to interact with user interface 116. For example, touchscreen 148 may provide information to users of vehicle 100. User interface 116 may also accept input from the user via touchscreen 148. Peripherals 108 may also enable vehicle 100 to communicate with devices, such as other vehicle devices.

Wireless communication system 146 may wirelessly communicate with one or more devices directly or via a communication network. For example, wireless communication system 146 could use 3G cellular communication, such as code-division multiple access (CDMA), evolution-data optimized (EVDO), global system for mobile communications (GSM) / general packet radio service (GPRS), or cellular communication, such as 4G worldwide interoperability for microwave access (WiMAX) or long-term evolution (LTE), or 5G. Alternatively, wireless communication system 146 may communicate with a wireless local area network (WLAN) using WIFI^{®} or other possible connections. Wireless communication system 146 may also communicate directly with a device using an infrared link, Bluetooth, or ZigBee, for example. Other wireless protocols, such as various vehicular communication systems, are possible within the context of the disclosure. For example, wireless communication system 146 may include one or more dedicated short-range communications (DSRC) devices that could include public and/or private data communications between vehicles and/or roadside stations.

Vehicle 100 may include power supply 110 for powering components. Power supply 110 may include a rechargeable lithium-ion or lead-acid battery in some embodiments. For instance, power supply 110 may include one or more batteries configured to provide electrical power. Vehicle 100 may also use other types of power supplies. In an example embodiment, power supply 110 and energy source 119 may be integrated into a single energy source.

Vehicle 100 may also include computer system 112 to perform operations, such as operations described therein. As such, computer system 112 may include processor 113 (which could include at least one microprocessor) operable to execute instructions 115 stored in a non-transitory, computer-readable medium, such as data storage 114. As such, processor 113 can represent one or multiple processors. In some embodiments, computer system 112 may represent a plurality of computing devices that may serve to control individual components or subsystems of vehicle 100 in a distributed fashion.

In some embodiments, data storage 114 may contain instructions 115 (e.g., program logic) executable by processor 113 to execute various functions of vehicle 100, including those described above in connection with Figure 1. Data storage 114 may contain additional instructions as well, including instructions to transmit data to, receive data from, interact with, and/or control one or more of propulsion system 102, sensor system 104, control system 106, and peripherals 108.

In addition to instructions 115, data storage 114 may store data such as roadway maps, path information, among other information. Such information may be used by vehicle 100 and computer system 112 during the operation of vehicle 100 in the autonomous, semi-autonomous, and/or manual modes.

Vehicle 100 may include user interface 116 for providing information to or receiving input from a user of vehicle 100. User interface 116 may control or enable control of content and/or the layout of interactive images that could be displayed on touchscreen 148. Further, user interface 116 could include one or more input/output devices within the set of peripherals 108, such as wireless communication system 146, touchscreen 148, microphone 150, and speaker 152.

Computer system 112 may control the function of vehicle 100 based on inputs received from various subsystems (e.g., propulsion system 102, sensor system 104, or control system 106), as well as from user interface 116. For example, computer system 112 may utilize input from sensor system 104 in order to estimate the output produced by propulsion system 102 and control system 106. Depending upon the embodiment, computer system 112 could be operable to monitor many aspects of vehicle 100 and its subsystems. In some embodiments, computer system 112 may disable some or all functions of the vehicle 100 based on signals received from sensor system 104.

The components of vehicle 100 could be configured to work in an interconnected fashion with other components within or outside their respective systems. For instance, in an example embodiment, camera 130 could capture a plurality of images that could represent information about a state of a surrounding environment of vehicle 100 operating in an autonomous or semi-autonomous mode. The state of the surrounding environment could include parameters of the road on which the vehicle is operating. For example, computer vision system 140 may be able to recognize the slope (grade) or other features based on the plurality of images of a roadway. Additionally, the combination of GPS 122 and the features recognized by computer vision system 140 may be used with map data stored in data storage 114 to determine specific road parameters. Further, radar 126 and/or lidar 128, and/or some other environmental mapping, ranging, and/or positioning sensor system may also provide information about the surroundings of the vehicle.

In other words, a combination of various sensors (which could be termed input-indication and output-indication sensors) and computer system 112 could interact to provide an indication of an input provided to control a vehicle or an indication of the surroundings of a vehicle.

In some embodiments, computer system 112 may make a determination about various objects based on data that is provided by systems other than the radio system. For example, vehicle 100 may have lasers or other optical sensors configured to sense objects in a field of view of the vehicle. Computer system 112 may use the outputs from the various sensors to determine information about objects in a field of view of the vehicle, and may determine distance and direction information to the various objects. Computer system 112 may also determine whether objects are desirable or undesirable based on the outputs from the various sensors.

Although Figure 1 shows various components of vehicle 100 (i.e., wireless communication system 146, computer system 112, data storage 114, and user interface 116) as being integrated into the vehicle 100, one or more of these components could be mounted or associated separately from vehicle 100. For example, data storage 114 could, in part or in full, exist separate from vehicle 100. Thus, vehicle 100 could be provided in the form of device elements that may be located separately or together. The device elements that make up vehicle 100 could be communicatively coupled together in a wired and/or wireless fashion.

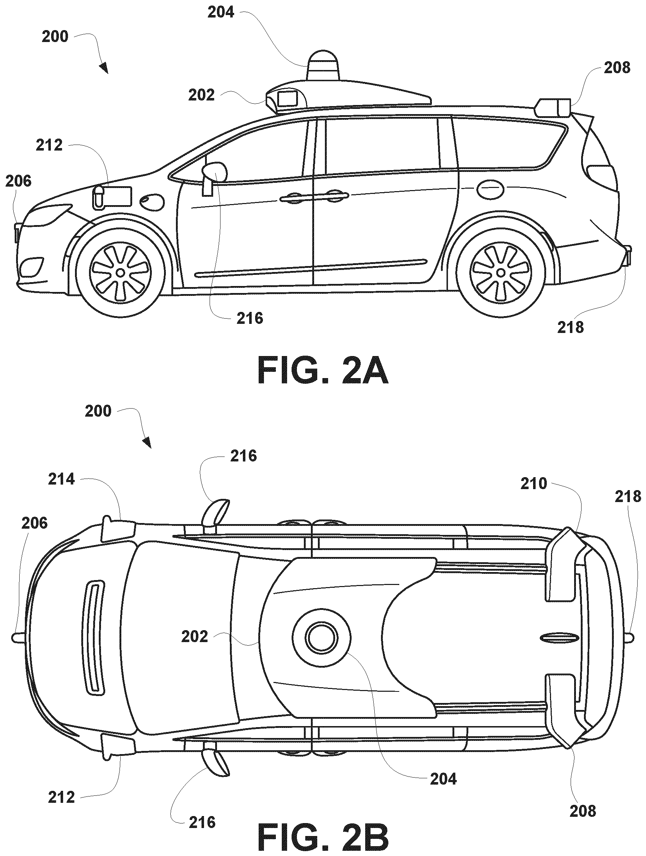

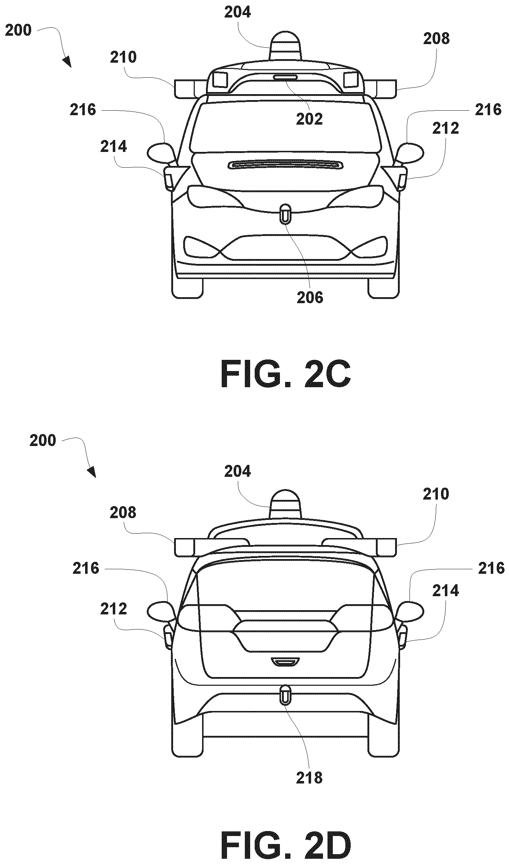

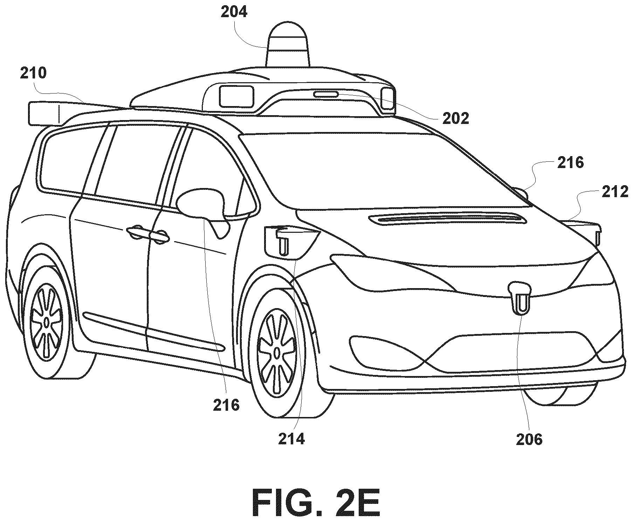

Figures 2A-2E show an example vehicle 200 (e.g., a fully autonomous vehicle or semi-autonomous vehicle) that can include some or all of the functions described in connection with vehicle 100 in reference to Figure 1. Although vehicle 200 is illustrated in Figures 2A-2E as a van with side view mirrors for illustrative purposes, the present disclosure is not so limited. For instance, vehicle 200 can represent a truck, a car, a semi-trailer truck, a motorcycle, a golf cart, an off-road vehicle, a farm vehicle, or any other vehicle that is described elsewhere herein (e.g., buses, boats, airplanes, helicopters, drones, lawn mowers, earth movers, submarines, all-terrain vehicles, snowmobiles, aircraft, recreational vehicles, amusement park vehicles, farm equipment, construction equipment or vehicles, warehouse equipment or vehicles, factory equipment or vehicles, trams, trains, trolleys, sidewalk delivery vehicles, and robot devices).

Vehicle 200 may include one or more sensor systems 202, 204, 206, 208, 210, 212, 214, and 218. In some embodiments, sensor systems 202, 204, 206, 208, 210, 212, 214, and/or 218 could represent one or more optical systems (e.g. cameras), one or more lidars, one or more radars, one or more inertial sensors, one or more humidity sensors, one or more acoustic sensors (e.g., microphones and sonar devices), or one or more other sensors configured to sense information about an environment that is surrounding vehicle 200. In other words, any sensor system now known or later created could be coupled to vehicle 200 and/or could be utilized in conjunction with various operations of vehicle 200. As an example, a lidar could be utilized in self-driving or other types of navigation, planning, perception, and/or mapping operations of vehicle 200. In addition, sensor systems 202, 204, 206, 208, 210, 212, 214, and/or 218 could represent a combination of sensors described herein (e.g., one or more lidars and radars; one or more lidars and cameras; one or more cameras and radars; or one or more lidars, cameras, and radars).

Note that the number, location, and type of sensor systems (e.g., 202 and 204) depicted in Figures 2A-E are intended as a non-limiting example of the location, number, and type of such sensor systems of an autonomous or semi-autonomous vehicle. Alternative numbers, locations, types, and configurations of such sensors are possible (e.g., to comport with vehicle size, shape, aerodynamics, fuel economy, aesthetics, or other conditions, to reduce cost, or to adapt to specialized environmental or application circumstances). For example, the sensor systems (e.g., 202 and 204) could be disposed of in various other locations on the vehicle (e.g., at location 216) and could have fields of view that correspond to internal and/or surrounding environments of vehicle 200.

The sensor system 202 may be mounted atop vehicle 200 and may include one or more sensors configured to detect information about an environment that is surrounding vehicle 200, and output indications of the information. For example, sensor system 202 can include any combination of cameras, radars, lidars, inertial sensors, humidity sensors, and acoustic sensors (e.g., microphones and sonar devices). The sensor system 202 can include one or more movable mounts that could be operable to adjust the orientation of one or more sensors in the sensor system 202. In one embodiment, the movable mount could include a rotating platform that could scan sensors so as to obtain information from each direction around vehicle 200. In another embodiment, the movable mount of the sensor system 202 could be movable in a scanning fashion within a particular range of angles and/or azimuths and/or elevations. The sensor system 202 could be mounted atop the roof of a car, although other mounting locations are possible.

Additionally, the sensors of sensor system 202 could be distributed in different locations and need not be collocated in a single location. Furthermore, each sensor of sensor system 202 can be configured to be moved or scanned independently of other sensors of sensor system 202. Additionally or alternatively, multiple sensors may be mounted at one or more of sensor systems 202, 204, 206, 208, 210, 212, 214, and/or 218. For example, there may be two lidar devices mounted at a sensor location and/or there may be one lidar device and one radar mounted at a sensor location.

The one or more sensor systems 202, 204, 206, 208, 210, 212, 214, and/or 218 could include one or more lidar devices. For example, the lidar devices could include a plurality of light-emitter devices arranged over a range of angles with respect to a given plane (e.g., the x-y plane). For example, one or more of sensor systems 202, 204, 206, 208, 210, 212, 214, and/or 218 may be configured to rotate or pivot about an axis (e.g., the z-axis) perpendicular to the given plane so as to illuminate an environment that is surrounding vehicle 200 with light pulses. Based on detecting various aspects of reflected light pulses (e.g., the elapsed time of flight, polarization, and intensity), information about the surrounding environment may be determined.

In an example embodiment, sensor systems 202, 204, 206, 208, 210, 212, 214, and/or 218 may be configured to provide respective point cloud information that may relate to physical objects within the surrounding environment of vehicle 200. While vehicle 200 and sensor systems 202, 204, 206, 208, 210, 212, 214, and 218 are illustrated as including certain features, it will be understood that other types of sensor systems are contemplated within the scope of the present disclosure. Further, vehicle 200 can include any of the components described in connection with vehicle 100 of Figure 1.

In an example configuration, one or more radars can be located on vehicle 200. Similar to radar 126 described above, the one or more radars may include antennas configured to transmit and receive radio waves (e.g., electromagnetic waves having frequencies between 30 Hz and 300 GHz). Such radio waves may be used to determine the distance to and/or velocity of one or more objects in the surrounding environment of vehicle 200. For example, one or more sensor systems 202, 204, 206, 208, 210, 212, 214, and/or 218 could include one or more radars. In some examples, one or more radars can be located near the rear of vehicle 200 (e.g., sensor systems 208 and 210), to actively scan the environment near the back of vehicle 200 for the presence of radio-reflective objects. Similarly, one or more radars can be located near the front of vehicle 200 (e.g., sensor systems 212 or 214) to actively scan the environment near the front of vehicle 200. A radar can be situated, for example, in a location suitable to illuminate a region including a forward-moving path of vehicle 200 without occlusion by other features of vehicle 200. For example, a radar can be embedded in and/or mounted in or near the front bumper, front headlights, cowl, and/or hood, etc. Furthermore, one or more additional radars can be located to actively scan the side and/or rear of vehicle 200 for the presence of radio-reflective objects, such as by including such devices in or near the rear bumper, side panels, rocker panels, and/or undercarriage, etc.

Vehicle 200 can include one or more cameras. For example, the one or more sensor systems 202, 204, 206, 208, 210, 212, 214, and/or 218 could include one or more cameras. The camera can be a photosensitive instrument, such as a still camera, a video camera, a thermal imaging camera, a stereo camera, a night vision camera, etc., that is configured to capture a plurality of images of the surrounding environment of vehicle 200. To this end, the camera can be configured to detect visible light, and can additionally or alternatively be configured to detect light from other portions of the spectrum, such as infrared or ultraviolet light. The camera can be a two-dimensional detector, and can optionally have a three-dimensional spatial range of sensitivity. In some embodiments, the camera can include, for example, a range detector configured to generate a two-dimensional image indicating distance from the camera to a number of points in the surrounding environment. To this end, the camera may use one or more range detecting techniques. For example, the camera can provide range information by using a structured light technique in which vehicle 200 illuminates an object in the surrounding environment with a predetermined light pattern, such as a grid or checkerboard pattern and uses the camera to detect a reflection of the predetermined light pattern from environmental surroundings. Based on distortions in the reflected light pattern, vehicle 200 can determine the distance to the points on the object. The predetermined light pattern may comprise infrared light, or radiation at other suitable wavelengths for such measurements. In some examples, the camera can be mounted inside the front windshield of vehicle 200. Specifically, the camera can be situated to capture images from a forward-looking view with respect to the orientation of vehicle 200. Other mounting locations and viewing angles of the camera can also be used, either inside or outside vehicle 200. Further, the camera can have associated optics operable to provide an adjustable field of view. Still further, the camera can be mounted to vehicle 200 with a movable mount to vary a pointing angle of the camera, such as via a pan/tilt mechanism.

Vehicle 200 may also include one or more acoustic sensors (e.g., one or more of sensor systems 202, 204, 206, 208, 210, 212, 214, 216, 218 may include one or more acoustic sensors) used to sense a surrounding environment of vehicle 200. Acoustic sensors may include microphones (e.g., piezoelectric microphones, condenser microphones, ribbon microphones, or microelectromechanical systems (MEMS) microphones) used to sense acoustic waves (i.e., pressure differentials) in a fluid (e.g., air) of the environment that is surrounding vehicle 200. Such acoustic sensors may be used to identify sounds in the surrounding environment (e.g., sirens, human speech, animal sounds, or alarms) upon which control strategy for vehicle 200 may be based. For example, if the acoustic sensor detects a siren (e.g., an ambulatory siren or a fire engine siren), vehicle 200 may slow down and/or navigate to the edge of a roadway.

Although not shown in Figures 2A-2E, vehicle 200 can include a wireless communication system (e.g., similar to the wireless communication system 146 of Figure 1 and/or in addition to the wireless communication system 146 of Figure 1). The wireless communication system may include wireless transmitters and receivers that could be configured to communicate with devices external or internal to vehicle 200. Specifically, the wireless communication system could include transceivers configured to communicate with other vehicles and/or computing devices, for instance, in a vehicular communication system or a roadway station. Examples of such vehicular communication systems include DSRC, radio frequency identification (RFID), and other proposed communication standards directed towards intelligent transport systems.

Vehicle 200 may include one or more other components in addition to or instead of those shown. The additional components may include electrical or mechanical functionality.

A control system of vehicle 200 may be configured to control vehicle 200 in accordance with a control strategy from among multiple possible control strategies. The control system may be configured to receive information from sensors coupled to vehicle 200 (on or off vehicle 200), modify the control strategy (and an associated driving behavior) based on the information, and control vehicle 200 in accordance with the modified control strategy. The control system further may be configured to monitor the information received from the sensors, and continuously evaluate driving conditions; and also may be configured to modify the control strategy and driving behavior based on changes in the driving conditions. For example, a route taken by a vehicle from one destination to another may be modified based on driving conditions. Additionally or alternatively, the velocity, acceleration, turn angle, follow distance (i.e., distance to a vehicle ahead of the present vehicle), lane selection, etc. could all be modified in response to changes in the driving conditions.

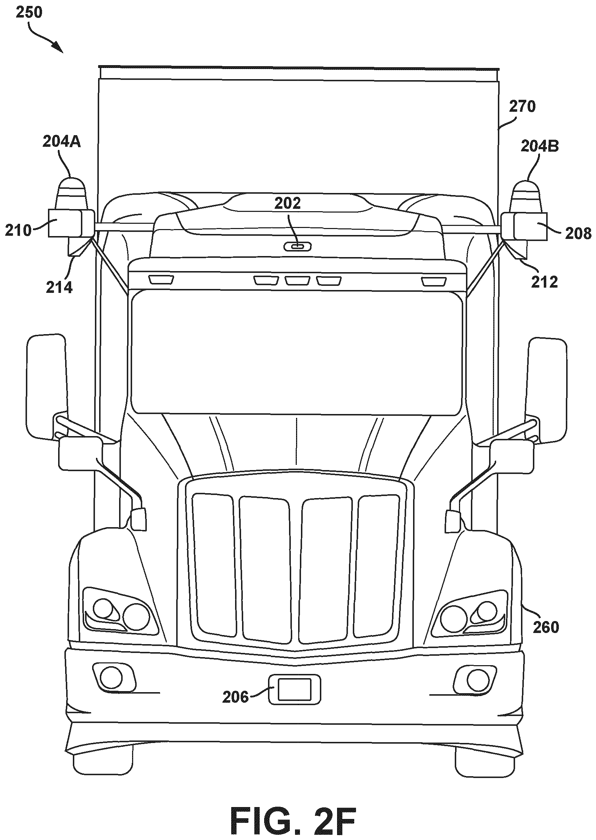

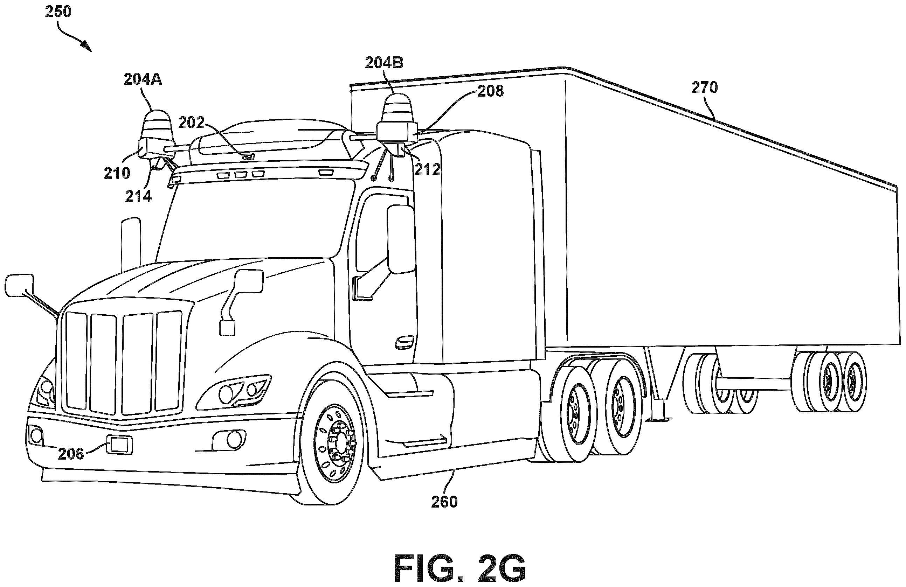

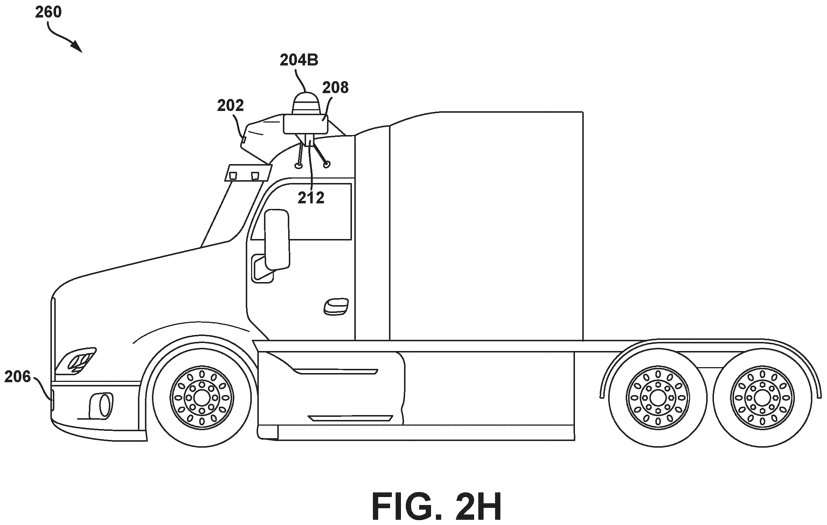

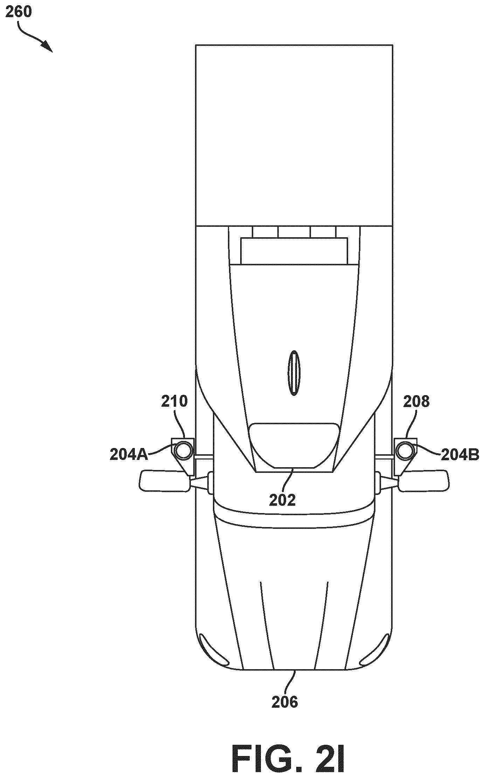

As described above, in some embodiments, vehicle 200 may take the form of a van, but alternate forms are also possible and are contemplated herein. As such, Figures 2F-2I illustrate embodiments where vehicle 250 takes the form of a semi-truck. For example, Figure 2F illustrates a front-view of vehicle 250 and Figure 2G illustrates an isometric view of vehicle 250. In embodiments where vehicle 250 is a semi-truck, vehicle 250 may include tractor portion 260 and trailer portion 270 (illustrated in Figure 2G). Figures 2H and 2I provide a side view and a top view, respectively, of the tractor portion 260. Similar to vehicle 200 illustrated above, vehicle 250 illustrated in Figures 2F-2I may also include a variety of sensor systems (e.g., similar to the sensor systems 202, 206, 208, 210, 212, 214 shown and described with reference to Figures 2A-2E). In some embodiments, whereas vehicle 200 of Figures 2A-2E may only include a single copy of some sensor systems (e.g., sensor system 204), vehicle 250 illustrated in Figures 2F-2I may include multiple copies of that sensor system (e.g., sensor systems 204A and 204B, as illustrated).

While drawings and description throughout may reference a given form of vehicle (e.g., semi-truck vehicle 250 or vehicle 200 shown as a van), it is understood that embodiments described herein can be equally applied in a variety of vehicle contexts (e.g., with modifications employed to account for a form factor of vehicle). For example, sensors and/or other components described or illustrated as being part of vehicle 200 could also be used (e.g., for navigation and/or obstacle detection and avoidance) in semi-truck vehicle 250

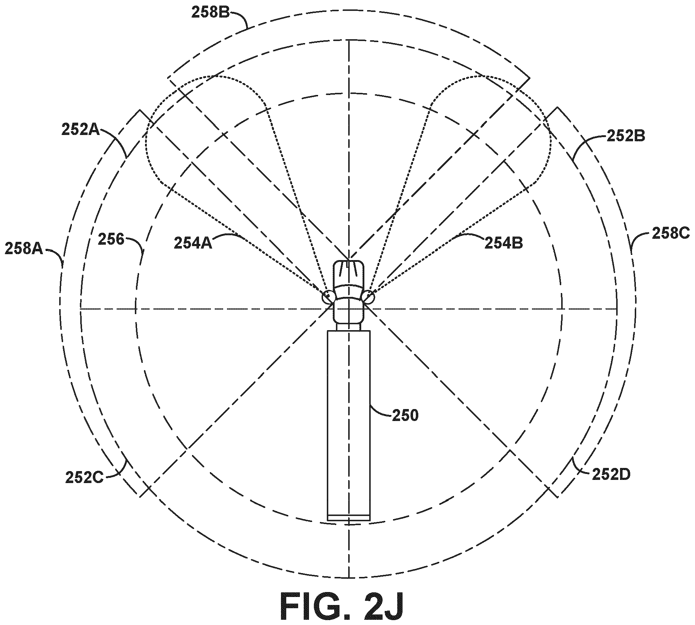

Figure 2J illustrates various sensor fields of view (e.g., associated with vehicle 250 described above). As described above, vehicle 250 may contain a plurality of sensors / sensor units. The locations of the various sensors may correspond to the locations of the sensors disclosed in Figures 2F-2I, for example. However, in some instances, the sensors may have other locations. Sensors location reference numbers are omitted from Figure 2J for simplicity of the drawing. For each sensor unit of vehicle 250, Figure 2J illustrates a representative field of view (e.g., fields of view labeled as 252A, 252B, 252C, 252D, 254A, 254B, 256, 258A, 258B, and 258C). The field of view of a sensor may include an angular region (e.g., an azimuthal angular region and/or an elevational angular region) over which the sensor may detect objects.

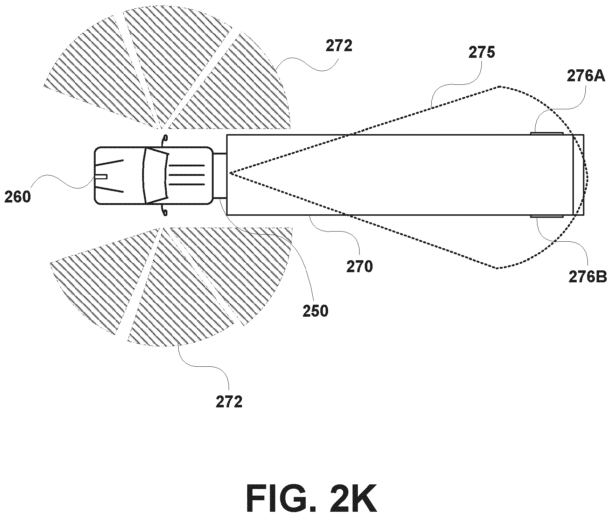

Figure 2K illustrates beam steering for a sensor of a vehicle (e.g., vehicle 250 shown and described with reference to Figures 2F-2J), according to example embodiments. In various embodiments, a sensor unit of vehicle 250 may be a radar, a lidar, a sonar, etc. Further, in some embodiments, during the operation of the sensor, the sensor may be scanned within the field of view of the sensor. Various different scanning angles for an example sensor are shown as regions 272, which each indicate the angular region over which the sensor is operating. The sensor may periodically or iteratively change the region over which it is operating. In some embodiments, multiple sensors may be used by vehicle 250 to measure regions 272. In addition, other regions may be included in other examples. For instance, one or more sensors may measure aspects of the trailer 270 of vehicle 250 and/or a region directly in front of vehicle 250.

At some angles, region of operation 275 of the sensor may include rear wheels 276A, 276B of trailer 270. Thus, the sensor may measure rear wheel 276A and/or rear wheel 276B during operation. For example, rear wheels 276A, 276B may reflect lidar signals or radar signals transmitted by the sensor. The sensor may receive the reflected signals from rear wheels 276A, 276. Therefore, the data collected by the sensor may include data from the reflections off the wheel.

In some instances, such as when the sensor is a radar, the reflections from rear wheels 276A, 276B may appear as noise in the received radar signals. Consequently, the radar may operate with an enhanced signal to noise ratio in instances where rear wheels 276A, 276B direct radar signals away from the sensor.

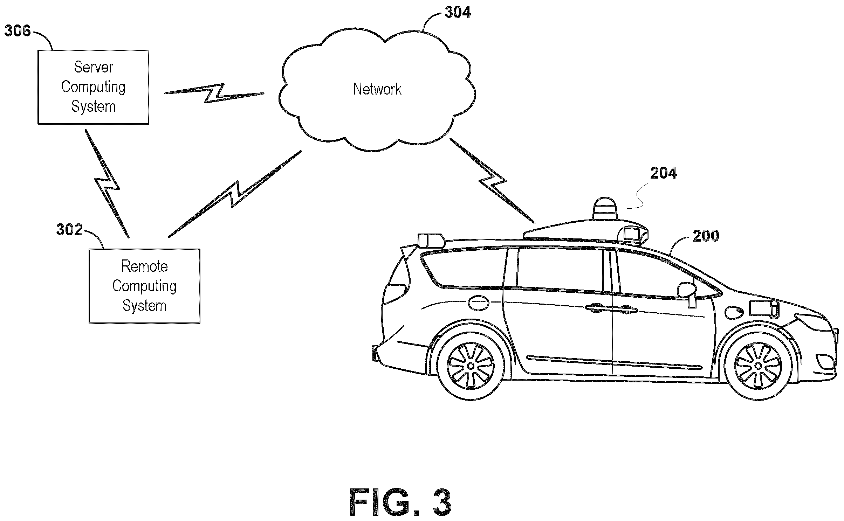

Figure 3 is a conceptual illustration of wireless communication between various computing systems related to an autonomous or semi-autonomous vehicle, according to example embodiments. In particular, wireless communication may occur between remote computing system 302 and vehicle 200 via network 304. Wireless communication may also occur between server computing system 306 and remote computing system 302, and between server computing system 306 and vehicle 200.

Vehicle 200 can correspond to various types of vehicles capable of transporting passengers or objects between locations, and may take the form of any one or more of the vehicles discussed above. In some instances, vehicle 200 may operate in an autonomous or semi-autonomous mode that enables a control system to safely navigate vehicle 200 between destinations using sensor measurements. When operating in an autonomous or semi-autonomous mode, vehicle 200 may navigate with or without passengers. As a result, vehicle 200 may pick up and drop off passengers between desired destinations.

Remote computing system 302 may represent any type of device related to remote assistance techniques, including but not limited to those described herein. Within examples, remote computing system 302 may represent any type of device configured to (i) receive information related to vehicle 200, (ii) provide an interface through which a human operator can in turn perceive the information and input a response related to the information, and (iii) transmit the response to vehicle 200 or to other devices. Remote computing system 302 may take various forms, such as a workstation, a desktop computer, a laptop, a tablet, a mobile phone (e.g., a smart phone), and/or a server. In some examples, remote computing system 302 may include multiple computing devices operating together in a network configuration.

Remote computing system 302 may include one or more subsystems and components similar or identical to the subsystems and components of vehicle 200. At a minimum, remote computing system 302 may include a processor configured for performing various operations described herein. In some embodiments, remote computing system 302 may also include a user interface that includes input/output devices, such as a touchscreen and a speaker. Other examples are possible as well.

Network 304 represents infrastructure that enables wireless communication between remote computing system 302 and vehicle 200. Network 304 also enables wireless communication between server computing system 306 and remote computing system 302, and between server computing system 306 and vehicle 200.

The position of remote computing system 302 can vary within examples. For instance, remote computing system 302 may have a remote position from vehicle 200 that has wireless communication via network 304. In another example, remote computing system 302 may correspond to a computing device within vehicle 200 that is separate from vehicle 200, but with which a human operator can interact while a passenger or driver of vehicle 200. In some examples, remote computing system 302 may be a computing device with a touchscreen operable by the passenger of vehicle 200.

In some embodiments, operations described herein that are performed by remote computing system 302 may be additionally or alternatively performed by vehicle 200 (i.e., by any system(s) or subsystem(s) of vehicle 200). In other words, vehicle 200 may be configured to provide a remote assistance mechanism with which a driver or passenger of the vehicle can interact.

Server computing system 306 may be configured to wirelessly communicate with remote computing system 302 and vehicle 200 via network 304 (or perhaps directly with remote computing system 302 and/or vehicle 200). Server computing system 306 may represent any computing device configured to receive, store, determine, and/or send information relating to vehicle 200 and the remote assistance thereof. As such, server computing system 306 may be configured to perform any operation(s), or portions of such operation(s), that is/are described herein as performed by remote computing system 302 and/or vehicle 200. Some embodiments of wireless communication related to remote assistance may utilize server computing system 306, while others may not.

Server computing system 306 may include one or more subsystems and components similar or identical to the subsystems and components of remote computing system 302 and/or vehicle 200, such as a processor configured for performing various operations described herein, and a wireless communication interface for receiving information from, and providing information to, remote computing system 302 and vehicle 200.

The various systems described above may perform various operations. These operations and related features will now be described.

In line with the discussion above, a computing system (e.g., remote computing system 302, server computing system 306, or a computing system local to vehicle 200) may operate to use a camera to capture images of the surrounding environment of an autonomous or semi-autonomous vehicle. In general, at least one computing system will be able to analyze the images and possibly control the autonomous or semi-autonomous vehicle.

In some embodiments, to facilitate autonomous or semi-autonomous operation, a vehicle (e.g., vehicle 200) may receive data representing objects in an environment surrounding the vehicle (also referred to herein as "environment data") in a variety of ways. A sensor system on the vehicle may provide the environment data representing objects of the surrounding environment. For example, the vehicle may have various sensors, including a camera, a radar, a lidar, a microphone, a radio unit, and other sensors. Each of these sensors may communicate environment data to a processor in the vehicle about information each respective sensor receives.

In one example, a camera may be configured to capture still images and/or video. In some embodiments, the vehicle may have more than one camera positioned in different orientations. Also, in some embodiments, the camera may be able to move to capture images and/or video in different directions. The camera may be configured to store captured images and video to a memory for later processing by a processing system of the vehicle. The captured images and/or video may be the environment data. Further, the camera may include an image sensor as described herein.

In another example, a radar may be configured to transmit an electromagnetic signal that will be reflected by various objects near the vehicle, and then capture electromagnetic signals that reflect off the objects. The captured reflected electromagnetic signals may enable the radar (or processing system) to make various determinations about objects that reflected the electromagnetic signal. For example, the distances to and positions of various reflecting objects may be determined. In some embodiments, the vehicle may have more than one radar in different orientations. The radar may be configured to store captured information to a memory for later processing by a processing system of the vehicle. The information captured by the radar may be environmental data.

In another example, a lidar may be configured to transmit an electromagnetic signal (e.g., infrared light, such as that from a gas or diode laser, or other possible light source) that will be reflected by target objects near the vehicle. The lidar may be able to capture the reflected electromagnetic (e.g., infrared light) signals. The captured reflected electromagnetic signals may enable the range-finding system (or processing system) to determine a range to various objects. The lidar may also be able to determine a velocity or speed of target objects and store it as environment data.

Additionally, in an example, a microphone may be configured to capture audio of the environment surrounding the vehicle. Sounds captured by the microphone may include emergency vehicle sirens and the sounds of other vehicles. For example, the microphone may capture the sound of the siren of an ambulance, fire engine, or police vehicle. A processing system may be able to identify that the captured audio signal is indicative of an emergency vehicle. In another example, the microphone may capture the sound of an exhaust of another vehicle, such as that from a motorcycle. A processing system may be able to identify that the captured audio signal is indicative of a motorcycle. The data captured by the microphone may form a portion of the environment data.

In yet another example, the radio unit may be configured to transmit an electromagnetic signal that may take the form of a Bluetooth signal, 802.11 signal, and/or other radio technology signal. The first electromagnetic radiation signal may be transmitted via one or more antennas located in a radio unit. Further, the first electromagnetic radiation signal may be transmitted with one of many different radio-signaling modes. However, in some embodiments it is desirable to transmit the first electromagnetic radiation signal with a signaling mode that requests a response from devices located near the autonomous or semi-autonomous vehicle. The processing system may be able to detect nearby devices based on the responses communicated back to the radio unit and use this communicated information as a portion of the environment data.

In some embodiments, the processing system may be able to combine information from the various sensors in order to make further determinations of the surrounding environment of the vehicle. For example, the processing system may combine data from both radar information and a captured image to determine if another vehicle or pedestrian is in front of the autonomous or semi-autonomous vehicle. In other embodiments, other combinations of sensor data may be used by the processing system to make determinations about the surrounding environment.

While operating in an autonomous mode (or semi-autonomous mode), the vehicle may control its operation with little-to-no human input. For example, a human-operator may enter an address into the vehicle and the vehicle may then be able to drive, without further input from the human (e.g., the human does not have to steer or touch the brake/gas pedals), to the specified destination. Further, while the vehicle is operating autonomously or semi-autonomously, the sensor system may be receiving environment data. The processing system of the vehicle may alter the control of the vehicle based on environment data received from the various sensors. In some examples, the vehicle may alter a velocity of the vehicle in response to environment data from the various sensors. The vehicle may change velocity in order to avoid obstacles, obey traffic laws, etc. When a processing system in the vehicle identifies objects near the vehicle, the vehicle may be able to change velocity, or alter the movement in another way.

When the vehicle detects an object but is not highly confident in the detection of the object, the vehicle can request a human operator (or a more powerful computer) to perform one or more remote assistance tasks, such as (i) confirm whether the object is in fact present in the surrounding environment (e.g., if there is actually a stop sign or if there is actually no stop sign present), (ii) confirm whether the vehicle's identification of the object is correct, (iii) correct the identification if the identification was incorrect, and/or (iv) provide a supplemental instruction (or modify a present instruction) for the autonomous or semi-autonomous vehicle. Remote assistance tasks may also include the human operator providing an instruction to control operation of the vehicle (e.g., instruct the vehicle to stop at a stop sign if the human operator determines that the object is a stop sign), although in some scenarios, the vehicle itself may control its own operation based on the human operator's feedback related to the identification of the object.

To facilitate this, the vehicle may analyze the environment data representing objects of the surrounding environment to determine at least one object having a detection confidence below a threshold. A processor in the vehicle may be configured to detect various objects of the surrounding environment based on environment data from various sensors. For example, in one embodiment, the processor may be configured to detect objects that may be important for the vehicle to recognize. Such objects may include pedestrians, bicyclists, street signs, other vehicles, indicator signals on other vehicles, and other various objects detected in the captured environment data.

The detection confidence may be indicative of a likelihood that the determined object is correctly identified in the surrounding environment, or is present in the surrounding environment. For example, the processor may perform object detection of objects within image data in the received environment data, and determine that at least one object has the detection confidence below the threshold based on being unable to identify the object with a detection confidence above the threshold. If a result of an object detection or object recognition of the object is inconclusive, then the detection confidence may be low or below the set threshold.

The vehicle may detect objects of the surrounding environment in various ways depending on the source of the environment data. In some embodiments, the environment data may come from a camera and be image or video data. In other embodiments, the environment data may come from a lidar. The vehicle may analyze the captured image or video data to identify objects in the image or video data. The methods and apparatuses may be configured to monitor image and/or video data for the presence of objects of the surrounding environment. In other embodiments, the environment data may be radar, audio, or other data. The vehicle may be configured to identify objects of the surrounding environment based on the radar, audio, or other data.

In some embodiments, the techniques the vehicle uses to detect objects may be based on a set of known data. For example, data related to environmental objects may be stored to a memory located in the vehicle. The vehicle may compare received data to the stored data to determine objects. In other embodiments, the vehicle may be configured to determine objects based on the context of the data. For example, street signs related to construction may generally have an orange color. Accordingly, the vehicle may be configured to detect objects that are orange, and located near the side of roadways as construction-related street signs. Additionally, when the processing system of the vehicle detects objects in the captured data, it also may calculate a confidence for each object.

Further, the vehicle may also have a confidence threshold. The confidence threshold may vary depending on the type of object being detected. For example, the confidence threshold may be lower for an object that may require a quick responsive action from the vehicle, such as brake lights on another vehicle. However, in other embodiments, the confidence threshold may be the same for all detected objects. When the confidence associated with a detected object is greater than the confidence threshold, the vehicle may assume the object was correctly recognized and responsively adjust the control of the vehicle based on that assumption.

When the confidence associated with a detected object is less than the confidence threshold, the actions that the vehicle takes may vary. In some embodiments, the vehicle may react as if the detected object is present despite the low confidence level. In other embodiments, the vehicle may react as if the detected object is not present.

When the vehicle detects an object of the surrounding environment, it may also calculate a confidence associated with the specific detected object. The confidence may be calculated in various ways depending on the embodiment. In one example, when detecting objects of the surrounding environment, the vehicle may compare environment data to predetermined data relating to known objects. The closer the match between the environment data and the predetermined data, the higher the confidence. In other embodiments, the vehicle may use mathematical analysis of the environment data to determine the confidence associated with the objects.

In response to determining that an object has a detection confidence that is below the threshold, the vehicle may transmit, to the remote computing system, a request for remote assistance with the identification of the object. As discussed above, the remote computing system may take various forms. For example, the remote computing system may be a computing device within the vehicle that is separate from the vehicle, but with which a human operator can interact while a passenger or driver of the vehicle, such as a touchscreen interface for displaying remote assistance information. Additionally or alternatively, as another example, the remote computing system may be a remote computer terminal or other device that is located at a location that is not near the vehicle.

The request for remote assistance may include the environment data that includes the object, such as image data, audio data, etc. The vehicle may transmit the environment data to the remote computing system over a network (e.g., network 304), and in some embodiments, via a server (e.g., server computing system 306). The human operator of the remote computing system may in turn use the environment data as a basis for responding to the request.

In some embodiments, when the object is detected as having a confidence below the confidence threshold, the object may be given a preliminary identification, and the vehicle may be configured to adjust the operation of the vehicle in response to the preliminary identification. Such an adjustment of operation may take the form of stopping the vehicle, switching the vehicle to a human-controlled mode, changing the velocity of the vehicle (e.g., a speed and/or direction), among other possible adjustments.

In other embodiments, even if the vehicle detects an object having a confidence that meets or exceeds the threshold, the vehicle may operate in accordance with the detected object (e.g., come to a stop if the object is identified with high confidence as a stop sign), but may be configured to request remote assistance at the same time as (or at a later time from) when the vehicle operates in accordance with the detected object.

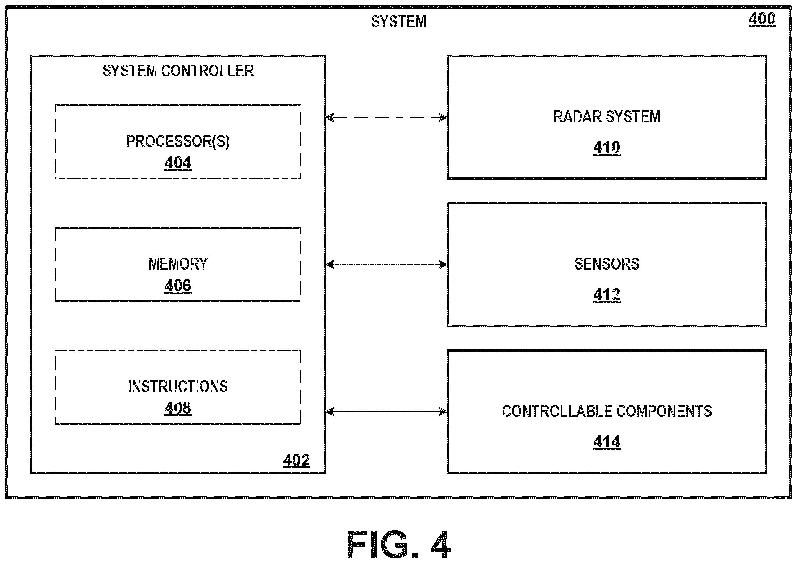

Figure 4 is a block diagram of a system, according to example embodiments. In particular, Figure 4 shows system 400 that includes system controller 402, radar system 410, sensors 412, and controllable components 414. System controller 402 includes processor(s) 404, memory 406, and instructions 408 stored on memory 406 and executable by processor(s) 404 to perform functions, such as the operations disclosed herein.

Processor(s) 404 can include one or more processors, such as one or more general-purpose microprocessors (e.g., having a single core or multiple cores) and/or one or more special purpose microprocessors. The one or more processors may include, for instance, one or more central processing units (CPUs), one or more microcontrollers, one or more graphical processing units (GPUs), one or more tensor processing units (TPUs), one or more ASICs, and/or one or more field-programmable gate arrays (FPGAs). Other types of processors, computers, or devices configured to carry out software instructions are also contemplated herein.

Memory 406 may include a computer-readable medium, such as a non-transitory, computer-readable medium, which may include without limitation, read-only memory (ROM), programmable read-only memory (PROM), erasable programmable read-only memory (EPROM), electrically erasable programmable read-only memory (EEPROM), non-volatile random-access memory (e.g., flash memory), a solid state drive (SSD), a hard disk drive (HDD), a Compact Disc (CD), a Digital Video Disk (DVD), a digital tape, read/write (R/W) CDs, R/W DVDs, etc.

Radar system 410 can be used in autonomous or semi-autonomous vehicles for navigation and object detection by using radio waves to detect and measure the distance, speed, and direction of objects in the surrounding environment. Radar system 410 can include one or multiple radar units, which each consists of a radar transmitter that emits radio waves and a radar receiver that captures the reflected waves from objects. By analyzing the time it takes for the waves to return and their frequency shifts (Doppler Effect), radar system 410 can determine the presence, location, and movement of objects.

In the context of autonomous or semi-autonomous vehicles, radar system 410 provides measurements that can assist with navigation and collision avoidance. Radar units are typically mounted on the vehicle's exterior, such as the front, rear, and sides. During navigation, radar system 410 may continuously emit radio waves in various directions, scanning the environment around the vehicle. When the waves encounter an object, they bounce back to a radar receiver, thereby enabling radar system 410 to analyze the reflected waves to calculate the distance, relative speed, and angle of the object. This information can be used by the vehicle's control system to make decisions and adjust the vehicle's trajectory accordingly, enabling it to detect and react to obstacles, pedestrians, vehicles, and other potential hazards in its path. By providing real-time data about the surrounding environment, radar system 410 can enhance the vehicle's perception capabilities and contribute to safer and more reliable navigation.

Radar system 410 offers operational benefits over other types of sensors in some aspects, such as cameras and lidar. Radar can perform well in adverse weather conditions, such as rain, fog, or dust, where other sensors might be limited. In particular, radio waves emitted by radar system 410 can penetrate these adverse conditions and provide reliable object detection. This makes radar particularly useful for enhancing the robustness and safety of autonomous or semi-autonomous vehicles in various weather scenarios. In addition, radar also excels at detecting the velocity and relative speed of nearby objects, which is useful for assessing the movement of surrounding vehicles, pedestrians, and other obstacles. By providing accurate speed information, radar system 410 enables the vehicle (or a driver of the vehicle) to make informed decisions about potential collision risks and adjust its behavior accordingly. In some cases, radar system 410 can also offer a longer range of measurements and broader field of view when compared to other sensors coupled to the vehicle.

Similarly, system controller 402 may use outputs from radar system 410 and sensors 412 to determine the characteristics of system 400 and/or characteristics of the surrounding environment. For example, sensors 412 may include one or more of a GPS, an IMU, an image capture device (e.g., a camera), a light sensor, a heat sensor, one or more lidar devices, and other sensors indicative of parameters relevant to system 400 and/or the surrounding environment. Radar system 410 is depicted as separate from sensors 412 for purposes of example, and may be considered as part of or as sensors 412 in some examples.

Based on characteristics of system 400 and/or the surrounding environment determined by system controller 402 based on the outputs from radar system 410 and the sensors 412, system controller 402 may control the controllable components 414 to perform one or more actions. For example, system 400 may correspond to a vehicle, in which case the controllable components 414 may include a braking system, a turning system, and/or an accelerating system of the vehicle, and system controller 402 may change aspects of these controllable components based on characteristics determined from radar system 410 and/or sensors 412 (e.g., when system controller 402 controls the vehicle in an autonomous or semi-autonomous mode). Within examples, radar system 410 and sensors 412 are also controllable by system controller 402.

As the number of deployed automotive radars increases, the total RF signal emission in the automotive band and likelihood of experiencing negative RFI effects will also increase. In general, RFI occurs when external electromagnetic signals interfere with a radar system or another emitter's ability to emit and receive radio frequency waves, which leads to distorted, degraded or erroneous measurements. RFI can arise from various sources, such as other electronic devices, communication signals, and environmental factors.

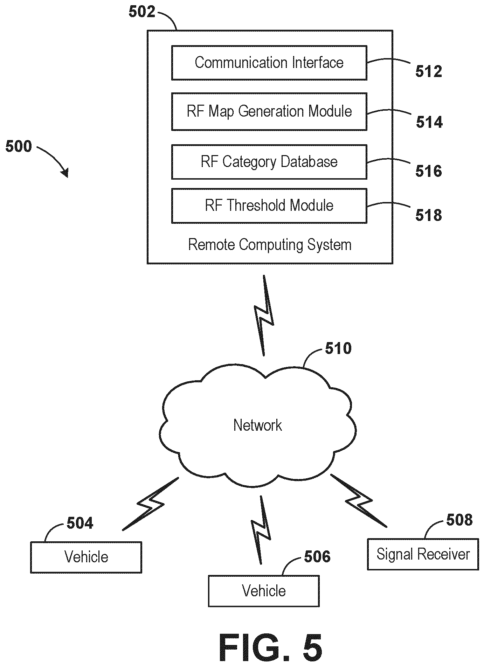

Figure 5 is a conceptual illustration of system 500, which enables the universal exchange of spectrum utilization for RFI mitigation and avoidance. In the example embodiment, system 500 is shown with remote computing system 502 engaging in wireless communication with vehicle 504, vehicle 506 and signal receiver 508 via network 510. The conceptual illustration of system 500 is intended to show a simplified arrangement that allows vehicles and other devices to exchange spectrum utilization and other RFI data to enable RFI mitigation and avoidance. Real world implementations can involve any number of devices, vehicles, emitters, and other sources that can contribute to the exchange of spectrum utilization for RFI mitigation and avoidance purposes.

In general, the RF spectrum represents the range of electromagnetic frequencies within which radio waves and wireless communication signals operate. The RF spectrum is typically divided into different bands with each band having specific applications and regulations. For instance, different bands define which frequencies that various technologies, like radio, television, cellular networks, Wi-Fi, Bluetooth, radar, and satellite communications, operate within. As such, efficient utilization of the RF spectrum enables modern communication systems to operate effectively.

System 500 is designed to enable efficient utilization of the RF band typically occupied by vehicle radars and other similar emitters. In particular, system 500 allows for RF data to be aggregated from vehicle radar systems and other devices and subsequently used to better understand RFI in real-time. Within system 500, remote computing system 502 can periodically or continuously aggregate RFI data and location data from various types of devices, such as vehicles (e.g., vehicle 504 and vehicle 506) and other types of signal receivers (e.g., signal receiver 508). Remote computing system 502 can then provide the aggregated RFI data back to the vehicles and other devices, which can allow the vehicles and devices to anticipate RFI and adjust operations to mitigate or avoid the negative effects of RFI. The way which remote computing system 502 aggregates and deploys RFI data to devices can vary within examples.

Remote computing system 502 represents one or multiple computing systems that are remotely positioned from vehicles and other signal emitters positioned at various locations. In general, remote computing system 502 is a networked setup in which computing resources (e.g., processing power, storage, and applications) are located on one or more servers that are situated at a distant location from vehicles and other RF devices. As shown in Figure 5, remote computing system 502 can communicate with vehicles and other devices over network 510.

In some examples, remote computing system 502 is located onboard a vehicle and can perform disclosed techniques during navigation by the vehicle. Vehicle systems can use aggregated RFI data to better understand and adapt to RFI during navigation of a route. In some cases, vehicle systems may reroute or perform other mitigation strategies to reduce the impact of RFI detected at a particular location.

Within examples, remote computing system 502 can use various techniques to aggregate RFI data from vehicle radar systems and other sources. For instance, remote computing system 502 can periodically send queries to vehicles and other devices for data updates. Once the data is collected, remote computing system 502 can then process and aggregate the data in batches. In addition, vehicles 504-506, signal receiver 508, and other devices can also have the ability to send data updates containing location and RFI information to remote computing system 502 whenever the devices obtain new RFI information. For instance, vehicle 504 and vehicle 506 can communicate RFI and location data in real-time as they navigate routes.

In the example shown in Figure 5, vehicle 504 and vehicle 506 are included to represent vehicles equipped with radar systems for measuring aspects of the environment during navigation. As such, vehicle 504 and vehicle 506 can measure and provide RFI data along with location data to remote computing system 502 to enable the aggregation of RFI data associated with the locations traveled by vehicles 504-506. Although the example illustrated in Figure 5 shows two vehicles (vehicles 504-506), any number of vehicles can communicate with remote computing system 502. In particular, as the number of vehicles and other devices that participate in system 500 increases, the abilities of system 500 can increase exponentially due to a network effect. With a larger vehicle base, remote computing system 502 is able to obtain more RFI data and can therefore develop a RFI representation based on a more diverse and comprehensive RFI data set. With a constant supply of new RFI data from vehicles and/or other devices, the generated RFI representation can be updated to provide a more accurate portrayal of potential RFI at various locations. In addition, in some cases, multiple vehicles can provide RFI data for the same location, which allows remote computing system 502 to maintain a more accurate representation of RFI at that location. Remote computing system 502 can monitor trends in the RFI data obtained for various locations over time and detect periods of days or weeks when RFI might be higher than normal.

In addition to vehicle 504 and vehicle 506, system 500 is also shown with signal receiver 508, which is included to represent any non-vehicle device designed to capture and process electromagnetic signals within the RF spectrum monitored by remote computing system 502. For instance, signal receiver 508 can be a stationary radar receiver or another type of infrastructure positioned alongside a road. Some example infrastructure includes spectrum analyzers and RF meters that can measure RF signals across different frequencies and provide information about the strength of signals and interference in the environment. In addition, infrastructure can also include directional antennas, traffic monitoring systems, and traffic lights and control systems. In some cases, traffic systems can include sensors that enable the measurement of RFI at that location. Other types of signal receivers and infrastructure can be used within examples to monitor RF infrastructure and diagnose signal interference. Similar to vehicles 504-506, signal receiver 508 represents other types of infrastructure that can also contribute to system 500 by measuring and providing RFI and location data to remote computing system 502 or directly to vehicles 504-506.

As shown in Figure 5, remote computing system 502 is able to communicate with vehicles 504-506, signal receiver 508, and other potential devices via network 510. Similar to network 304 shown in Figure 3, network 510 represents infrastructure that enables wireless communication between remote computing system 502 and various devices that can share RFI data to assist with mitigation and avoidance of RFI. For instance, network 510 can involve one or multiple cellular networks that provide mobile communication services over a wide geographic area. Technologies like 4G LTE and 5G can allow for high-speed data transfer between remote computing system 502, vehicles 504-506, and signal receiver 508. In some examples, network 510 can include one or multiple satellite networks, which can offer coverage in various locations. Similarly, network 510 can also include one or more WiFi networks that allow communication between different computing devices.

As further shown in Figure 5, remote computing system 502 includes communication interface 512, RFI map generation module 514, RFI category database 516, and RFI threshold module 518. Communication interface 512 can be used by remote computing system 502 to communicate with other devices, including to aggregate RFI data from vehicle 504, vehicle 506, signal receiver 508, and other sources. In general, communication interface 512 can be used to enable two-way communication and data transfer with vehicles and other types of devices. In some examples, communication interface 512 uses encrypted communication techniques when transferring data between remote computing system 502 and other devices.

RFI map generation module 514 represents a module designed to obtain and format the RFI data aggregated from vehicles 504-506 and other devices. Although RFI map generation module 514 is shown as part of remote computing system 502, vehicles 504-506 may similarly include RFI map generation module 514 and perform techniques described herein using RFI data obtained from various sources. The formatting and organization of the RFI data aggregated from various sources can differ within examples and can depend on a latency that exists during communication with the various devices. For instance, RFI map generation module 514 can be used by remote computing system 502 to generate one or multiple representations based on the RFI data obtained from vehicles 504-506, signal receiver 508, and other sources. RFI map generation module 514 can use map data and other information stored locally at remote computing system 502 and obtained from external sources (e.g., a map database).

In some examples, vehicles 504-506 and other devices may perform operations similar to RFI map generation module 514. For instance, vehicles 504-506 can format and organize RFI data obtained from each other and other sources (e.g., signal receiver 508 and remote computing system 502).

In some examples, RFI map generation module 514 can generate one or multiple RFI heat maps, which describes spectral power in a set of sub-bands arranged according to locations. The RFI heat map can be distributed to vehicles and third party sources with updates to the RFI heat map provided subsequently thereafter. For instance, remote computing system 502 can divide and provide data representing portions of the RFI heat map that are selected by the system based on the locations of the vehicles and third party sources. In some cases, the system provides portions of the heat map based on a route provided by a vehicle. The RFI heat map can be data-based in some examples and associate numeric RFI intensity levels and waveform parameters with different location coordinates.

In some examples, the RFI heat map can be visually represented using different colors similar to a generic heat map at the various locations to represent the spectral power detected at the different locations. For instance, the RFI heat map can be a graphical representation of data where individual values are represented as colors. The RFI heat map can be useful for visualizing the distribution and density of data points within a two-dimensional (2D) space, such as a grid or map. The RFI heat map can be used to display patterns, trends, and variations in data by assigning different colors to different values. For instance, a color scale can be used to represent low RFI values detected at locations (e.g., blue or green) to high RFI values detected at locations (e.g., red or yellow) with varying shades of color in-between. In some cases, RFI data can be divided into smaller segments (cells) with each cell representing a specific region. The value associated with each cell determines the color that the system will assign to the RFI heat map. The RFI heat map can include a legend that enables third parties to understand its content, such as which areas currently have high levels of RFI that can potentially interfere with radar performance.

RFI category database 516 can be used to further store details related to RFI that vehicles may encounter at various locations. For instance, RFI category database 516 can be used to store information, such as location and images for types of sources of RFI, such as stationary sources of RFI. Remote computing system 502 may compare waveforms and other reported RFI data received from vehicle systems with waveforms or other parameters associated with a location at the time the vehicle systems are preparing to travel at the location. This may lead remote computing system 502 to determine mitigation instructions for vehicle radar systems, such as adjustments to frequency or waveform parameters used by the vehicle radar systems.

RFI threshold module 518 can use RFI data and trends to determine RFI thresholds for various locations represented by a RFI map generated by RFI map generation module 514. A threshold refers to a predetermined value or level that, when exceeded, triggers remote computing system 502 to perform a specific action or response. As such, RFI threshold module 518 can generate thresholds to monitor RFI conditions, detect anomalies in the RFI data, and enable remote computing system 502 to make decisions based on the observed values.

In general, RFI threshold module 518 can set thresholds for different locations based on incoming RFI data. The value of a threshold assigned to a location can be determined based on the level of RFI that impacts radar performance in some cases. Remote computing system 502 can then use RFI threshold module 518 to monitor RFI data assigned to different locations as new RFI data is provided from vehicles and other systems positioned at the various locations. As new data comes in, RFI threshold module 518 can compare the current values of RFI aggregated for different locations with predefined thresholds. If the current RFI value crosses the predefined threshold for a location, a breach is detected, which may trigger remote computing system 502 to perform an action, such as providing alerts or notifications to vehicle radar systems in the area, logging and recording data associated with the RFI breach, and/or other automated responses that address or mitigate the issue.

Remote computing system 502 can provide mitigation techniques to vehicles 504-506 and other sources (e.g., signal receiver 508) to mitigate or avoid RFI at different locations. For instance, a mitigation technique can involve instructing a vehicle radar system to perform frequency hopping, where the radar system periodically changes its operating frequency. In addition, remote computing system 502 can also assign particular frequency bands to individual transmitters. For instance, each vehicle 504, 506 may receive a different frequency channel to operate on based on remote computing system 502 determining that vehicles 504-506 are located nearby each other. By switching frequencies, vehicles 504-506 can avoid interference from other radar systems or sources of electromagnetic interference that might be present in a particular frequency range. In some examples, vehicles 504-506 and other sources can determine mitigation techniques locally based on information received from other sources, such as other vehicles, remote computing system 502, and other infrastructure.

In some cases, remote computing system 502 may provide instructions to adjust waveform parameters, such as pulse width, repetition interval, modulation scheme, and/or amplitude based on the environment and interference conditions specified by RFI map generation module 514. Similarly, remote computing system 502 can provide instructions to vehicles 504, 506 and/or signal receiver 508 to perform sidelobe blanking when positioned in some locations that have dense RFI as specified by RFI map generation module 514. Sidelobe blanking can help prevent interference from affecting the main detection region of radars. Mitigation instructions can also specify pulse compression techniques, which involve transmitting long-duration waveforms and then compressing them in the receiver to improve target resolution. This can allow radars to distinguish between closely spaced targets and reduce the negative impact of RFI. Onboard vehicle systems can also determine mitigation instructions for vehicle radar systems to utilize to reduce the negative effects of RFI.

In some examples, remote computing system 502 may provide information that informs vehicle 504 and vehicle 506 that they are located nearby each other, which can enable vehicles 504-506 and other nearby radar systems to create a temporary collaborative radar network. Similarly, vehicles 504-506, signal receiver 508, and other sources can share information that indicates position and RFI usage. In situations where multiple radars are operating in close proximity (e.g., in urban environments), the radar systems can share information about their operating frequencies and waveforms to help avoid interference and increase performance through collaboration. As such, vehicle 504 and vehicle 506 can engage in communication to determine a strategy to reduce interference. For instance, vehicles 504-506 can coordinate transmission parameters via wireless communication to reduce interference.

Vehicles 504-506 can also perform disclosed techniques, which may involve using information provided by remote computing system 502. For instance, each vehicle can communicate with other vehicles and infrastructure located along a route that the vehicle is navigating. The communication can enable each vehicle to gather and aggregate RFI data to better understand and adapt to the surrounding environment. Vehicles 504-506 can determine mitigation strategies to perform based on the RFI data aggregated from various sources. Mitigation strategies can involve changing waveform, transmission patterns, frequency, ramp rate, polarization, timing, or other parameters. Other mitigation strategies can also involve reducing reliance on radar in high RFI environments, modifying routes to avoid areas that have particularly high RFI, coordinating transmission patterns with other nearby vehicles to reduce interference for cooperating radar systems, or a combination of mitigation techniques.

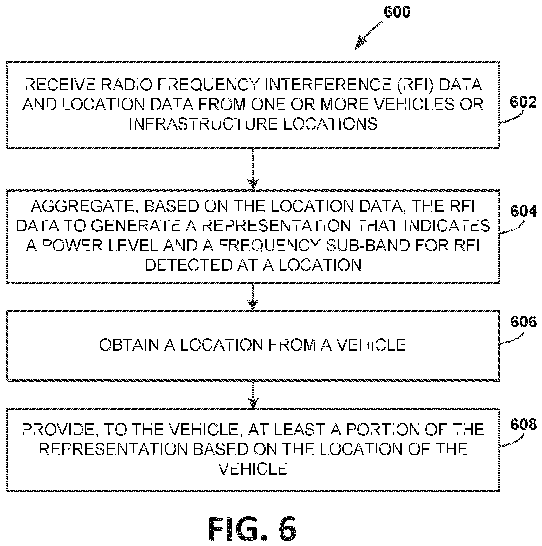

Figure 6 is a flowchart of a method for universal spectrum utilization exchange for RFI mitigation and avoidance, according to example embodiments. Method 600 may include one or more operations, functions, or actions as illustrated by one or more of blocks 602, 604, 606, and 608. Although the blocks are illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for method 600 and other processes and methods disclosed herein, the flowchart shows functionality and operation of one possible implementation of present embodiments. In this regard, each block may represent a module, a segment, or a portion of program code, which includes one or more instructions executable by a processor for implementing specific logical functions or steps in the process. The program code may be stored on any type of computer readable medium or memory, for example, such as a storage device including a disk or hard drive. In some examples, a remote computing system performs method 600. In other examples, onboard vehicle systems can perform method 600. Similarly, other types of computing devices and systems can be programmed to perform method 600.

At block 602, method 600 involves receiving RFI data and location data from one or more vehicles or infrastructure locations. The RFI data represents RFI parameters estimated by each vehicle during navigation or by each infrastructure. The vehicles can potentially detect and estimate RFI parameters experienced along various roads during navigation. Similarly, infrastructure locations can include spectrum analyzers, RF meters, traffic monitoring systems, traffic lights and control systems, and other types of devices that can determine RFI data at a location.

RFI parameters can include, but are not limited to, the power level, frequency sub-band, line of bearing, location, and waveform characteristics estimated for RFI detected during travel. The vehicles can communicate the RFI parameters along with location data in near-real time to a computing system. For instance, remote computing system 502 shown in Figure 5 can communicate with vehicles and other systems to receive RFI data estimated by vehicle radar systems and other emitters positioned within the environment. In some cases, the RFI data can include data generated by passive receive-only devices positioned at various locations.

In some examples, the computing system may receive, from each vehicle, first RFI data representing parameters used by a vehicle radar system to transmit radar signals and location data representing a direction of travel of the vehicle. For instance, the first RFI data represents transmission waveform metadata that includes waveform and frequency sub-band parameters used by the vehicle radar system to transmit radar signals. The computing system may also receive second RFI data corresponding to external RFI signals detected by the vehicle radar system on each vehicle where the external RFI signals originated from an emitter that is positioned remotely from the vehicle. The second RFI data can convey receive waveform metadata representing waveform and frequency sub-band parameters estimated for the external RFI signals and location data representing an estimated position for the emitter that is positioned remotely from the vehicle.

At block 604, method 600 involves aggregating, based on the location data, the RFI data to generate a representation that indicates a power level and a frequency sub-band for RFI detected at one or more locations. In some examples the representation can convey various information aggregated in the RFI data, such as line-of-bearings and locations for RFI sources detected during navigation.

The computing system generates a RFI heat map in some examples. The RFI heat map aligns the RFI data with roads used by the vehicles. In some instances, the computing system may estimate, based on trends in RFI data received from the vehicles, a position of a stationary RFI source and generate the RFI heat map such that the RFI heat map conveys the estimated position of the stationary RFI source. For instance, the system can obtain map data representing positions of roads and buildings at various locations. The computing system can then assign the RFI data to the map data such that the representation conveys RFI intensity at the positions of roads and buildings at the plurality of locations. The representation can visually display the RFI intensity at various locations using colors similar to a heat map.

At block 606, method 600 involves obtaining a location from a vehicle. For instance, the computing system may receive, from the vehicle, data specifying a route planned for the vehicle. Based on the route planned for the vehicle, the computing system may identify a portion of the representation that aligns with the route for the vehicle and provide the portion of the representation to the vehicle.

In some cases, the computing system receives, from the vehicle, data specifying a route planned for the vehicle and then provides data representing respective portions of the RFI heat map based on the route planned for the vehicle. The vehicle is configured to adjust radar operations or the route based on the data representing respective portions of the RFI heat map.

At block 608, method 600 involves providing, to the vehicle, at least a portion of the representation based on a location of the vehicle. In some examples, the computing system may determine, based on the portion of the representation, mitigation instructions for the vehicle to use during navigation of the route. The computing system can then provide the mitigation instructions in addition to the portion of the representation to the vehicle.

In some cases, the representation can convey RFI information estimated from a road-level perspective to align with how the vehicle will travel the route. In particular, the representation can indicate the position of RFI sources relative to the road (when available at this level of detail), which can include representing the line-of-bearing to each RFI source. This way, the vehicle systems can understand the position and arrangement of RFI sources relative to the road as the vehicle travels. In other cases, specific location and bearing information may not be available when distributing data of the representation to vehicles and other systems.

In some examples, method 600 further involves receiving additional RFI data and location data from one or more vehicles. The computing system can then modify the representation based on the additional RFI data and location data and provide at least a portion of the modified representation to one or more vehicles. In other cases, the participating radar systems may choose to upload their waveform parameters, which may be bookkept and shared in a similar manner.

In some examples, method 600 involves receiving, from the vehicle, data specifying a route for the vehicle and identifying a portion of the representation that aligns with the route for the vehicle. The computing system can then provide the portion of the representation to the vehicle.

In some examples, the computing system receives a planned route from a vehicle and provides one or more portions of the RFI heat map based on the planned route. The vehicle is configured to adjust radar operations or the planned route based on the one or more portions of the RFI heat map. In some cases, the computing system may adjust the RFI heat map over time as vehicles supply updated RFI data from various locations. The computing system can monitor adjustments and determine trends in RFI data across the locations represented by the RFI heat map. The computing system can also receive additional RFI data and location data from the plurality of vehicles and modify the RFI heat map based on the additional RFI data. The computing system may identify one or more trends for RFI data in one or more radar directions at one or more locations based on modifying the RFI heat map. For instance, a trend indicates a change in RFI at a given location based on a particular time of day. The computing system can then provide, based on the one or more trends for RFI data at one or more locations, mitigation instructions to one or more vehicles traveling near the one or more locations.

In some examples, the generated representation is an RF-dependent (center-frequency-based) heat map that uses a plurality of colors to visually convey the total received power partitioned into a number of RFI sub-bands (e.g., 76-77, 77-78, 78-79, 79-80, 80-81 GHz) corrected to the respective locations and pointing directions of the individual radars of the receiving vehicle. In some cases, the computing systems may monitor RFI data relative to a RFI threshold for a given location. Responsive to subsequent RFI data for the given location exceeding the RFI threshold for the given location, the computing system can trigger an alert for the given location. For instance, the computing system can provide mitigation instructions to the vehicle based on the location for the vehicle corresponding to the given location. In other cases, the knowledge of excessive power in a sub-band may be used to modify detection power levels to mitigate false positives or raise thresholds related to background noise that may be related to increased RFI. In a similar manner to the RFI heat map, any number of RFI related attributes may be shared. These attributes (that may be used by the radar system for purposes of reducing impact from RFI) include but are not limited to pulsewidth, PRI (pulse repetition interval), center frequency and waveform bandwidth (or ramp rate) and dwell time (total CPI duration) are usually the main parameters of interest.

The computing system can also receive a route for navigation by a vehicle from the vehicle and determine, based on the route and the representation, mitigation instructions for the vehicle. The computing system can then provide the mitigation instructions to the vehicle to enable a vehicle radar system on the vehicle to operate according to the mitigation instructions during navigation of the route by the vehicle. For instance, the computing system may determine a first frequency band for a first portion of the route for the vehicle radar system on the vehicle to use during navigation of the first portion of the route and a second frequency band for a second portion of the route for the vehicle radar system on the vehicle to use during navigation of the second portion of the route. In some cases, the computing system may determine one or more modifications to the route and provide the one or more modifications to the route to the vehicle.

In some examples, vehicle radars can be used with control electronics, which can include one or more field-programmable gate arrays (FPGAs), ASICs, CPUs, GPUs, and/or TPUs. For instance, a radar unit can generate and receive complex signals that require significant processing. One or more control electronics can be programmed to implement various signal processing algorithms, such as filtering, modulation/demodulation, noise reduction, and digital beamforming. These operations help extract relevant information from the received radar signals, enhance signal quality, and improve target detection and tracking. In addition, radar systems often involve the conversion of analog signals to digital format for further processing. The control electronics can include analog-to-digital converters (ADCs) and digital-to-analog converters (DACs) to facilitate these conversions. The control electronics can receive analog signals from radar sensors, digitize them, and process the digital data for analysis and interpretation.

In addition, the control electronics can also provide the capability for real-time control and coordination of various radar system components. For instance, the control electronics can handle synchronization, timing generation, and system control, ensuring the proper timing and sequencing of operations within the radar system. This real-time control is crucial for accurate and synchronized signal transmission and reception. The control electronics can efficiently handle large amounts of data generated by the radar system. The control electronics can implement data storage, buffering, and data flow management techniques, enabling efficient data handling during signal transmission. This includes tasks such as data compression, data packetization, and data routing, ensuring smooth and reliable data transmission within the radar system. The control electronics can also integrate various interfaces and protocols required for radar signal transmission, such as processors, memory modules, communication modules, and display units. The control electronics can provide the necessary interface logic to facilitate seamless data exchange between these components, enabling efficient data flow and system integration. The control electronics can also be reconfigured and customized to meet specific radar system requirements and adapt to changing operational needs. This allows radar system designers to implement and optimize algorithms and functionalities specific to their application, resulting in enhanced performance and efficiency.

This specification includes the following clauses:
Clause 1. A method comprising:
   receiving, at a computing system, radio frequency interference (RFI) data and location data from one or more vehicles or infrastructure locations, the RFI data representing RFI parameters estimated by each vehicle during navigation or by each infrastructure location;
   aggregating, based on the location data, the RFI data to generate a representation that indicates a power level and a frequency sub-band for RFI detected at one or more locations;
   obtaining, at the computing system, a location from a vehicle; and
   providing, by the computing system and to the vehicle, at least a portion of the representation based on the location of the vehicle.
Clause 2. The method of clause 1, further comprising:
   determining the power levels, the frequency sub-bands, one or more lines of bearing, and waveform parameters for RFI detected at the one or more locations based on RFI data received from one or more vehicles navigating at the one or more locations; and
   aggregating the RFI data to generate the representation further comprises:
      generating the representation to further indicate the waveform parameters and one or more lines of bearing for RFI detected at the one or more locations.
Clause 3. The method of clause 1, further comprising:
   receiving additional RFI data and location data from one or more vehicles or infrastructure locations;
   modifying the representation based on the additional RFI data and location data; and
   providing at least a portion of the modified representation to one or more vehicles.
Clause 4. The method of clause 1, wherein obtaining the location from the vehicle comprises:
   receiving, from the vehicle, data specifying a route planned for the vehicle;
   based on the route planned for the vehicle, identifying a portion of the representation that aligns with the route for the vehicle; and
   providing the portion of the representation to the vehicle.
Clause 5. The method of clause 4, further comprising:
   determining, based on the portion of the representation, mitigation instructions for the vehicle to use during navigation of the route, wherein the mitigation instructions depend on RFI parameters estimated by one or more vehicles positioned along the route; and
   providing the mitigation instructions in addition to the portion of the representation to the vehicle.
Clause 6. The method of clause 1, wherein receiving RFI data and location data from one or more vehicles or infrastructure locations comprises:
   receiving, from each vehicle, first RFI data representing parameters used by a vehicle radar system to transmit radar signals and location data representing a direction of travel of the vehicle.
Clause 7. The method of clause 6, wherein the first RFI data representing parameters used by the vehicle radar system to transmit radar signals comprises:
   transmission waveform metadata representing waveform and frequency sub-band parameters used by the vehicle radar system to transmit radar signals.
Clause 8. The method of clause 7, wherein receiving RFI data and location data from the plurality of vehicles further comprises:
   receiving second RFI data corresponding to external RFI detected by the vehicle radar system on each vehicle, wherein the external RFI originates from an emitter that is positioned remotely from the vehicle.
Clause 9. The method of clause 8, wherein the second RFI data corresponding to external RFI signals comprises:
   received waveform metadata representing waveform and frequency sub-band parameters estimated for the external RFI signals and location data representing an estimated position for the emitter that is positioned remotely from the vehicle.
Clause 10. The method of clause 1, wherein aggregating the RFI data into the representation comprises:
   generating a RFI heat map, wherein the RFI heat map aligns the RFI data with roads used by the plurality of vehicles; and
   estimating, based on trends in RFI data, a position of a stationary RFI source; and
   wherein generating the RFI heat map comprises:
      generating the RFI heat map such that the RFI heat map conveys the estimated position of the stationary RFI source.
Clause 11. The method of clause 10, wherein obtaining the location from the vehicle comprises:
   receiving, from the vehicle, data specifying a route planned for the vehicle; and
   wherein providing at least the portion of the representation comprises:
      providing data representing respective portions of the RFI heat map based on the route planned for the vehicle, wherein the vehicle is configured to adjust radar operations or the route based on the data representing respective portions of the RFI heat map.
Clause 12. The method of clause 11, further comprising:
   receiving additional RFI data and location data from one or more vehicles or infrastructure locations;
   modifying the RFI heat map; and
   identifying one or more trends for RFI data at one or more locations based on modifying the RFI heat map, wherein a trend indicates a change in RFI at a given location based on a particular time of day.
Clause 13. The method of clause 12, further comprising:
   based on the one or more trends for RFI data at one or more locations, providing mitigation instructions to one or more vehicles traveling proximate the one or more locations.
Clause 14. The method of clause 1, further comprising:
   obtaining map data representing positions of roads and buildings; and
   wherein aggregating the RFI data into a representation based on the location data comprises:
      associating the RFI data with the map data such that the representation conveys RFI intensity relative to roads and buildings.
Clause 15. The method of clause 1, further comprising:
   receiving, from the vehicle, data specifying a route planned for the vehicle;
   based on the route planned for the vehicle and the representation, determining a first frequency band for use by the vehicle during navigation of a first portion of the route and a second frequency band for use by the vehicle during navigation of a second portion of the route; and
   providing mitigation instructions to the vehicle, wherein the mitigation instructions specify the first frequency band for use by the vehicle during navigation of the first portion of the route and the second frequency band for use by the vehicle during navigation of the second portion of the route.
Clause 16. A system comprising:
   a computing device configured to:
   receive radio frequency interference (RFI) data and location data from one or more vehicles or infrastructure locations, the RFI data representing RFI parameters estimated by each vehicle during navigation or by each infrastructure location;
   aggregate, based on the location data, the RFI data to generate a representation that indicates a power level and a frequency sub-band for RFI detected at one or more locations;
   obtain a location from a vehicle; and
   provide, to the vehicle, at least a portion of the representation based on the location of the vehicle.
Clause 17. The system of clause 16, wherein the representation is a RFI heat map that uses a plurality of colors to visually convey the power level and the frequency sub-band at respective locations.
Clause 18. The system of clause 16, wherein the computing device is further configured to:
   monitor RFI data relative to a RFI threshold for a given location; and
   responsive to subsequent RFI data for the given location exceeding the RFI threshold for the given location, trigger an alert for the given location.
Clause 19. The system of clause 18, wherein the computing device is further configured to:
   based on the location for the vehicle corresponding to the given location, provide mitigation instructions to the vehicle.
Clause 20. A non-transitory computer-readable medium configured to store instructions, that when executed by a computing system comprising one or more processors, causes the computing system to perform operations comprising:
   receiving radio frequency interference (RFI) data and location data from one or more vehicles or infrastructure locations, the RFI data representing RFI parameters estimated by each vehicle during navigation or by each infrastructure location;
   aggregating, based on the location data, the RFI data to generate a representation that indicates a power level and a frequency sub-band for RFI detected at one or more locations;
   obtaining a location from a vehicle; and
   providing, to the vehicle, at least a portion of the representation based on the location of the vehicle.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the message flow diagrams, scenarios, and flow charts in the figures and as discussed herein, each step, block, operation, and/or communication can represent a processing of information and/or a transmission of information in accordance with example embodiments. Alternative embodiments are included within the scope of these example embodiments. In these alternative embodiments, for example, operations described as steps, blocks, transmissions, communications, requests, responses, and/or messages can be executed out of order from that shown or discussed, including substantially concurrently or in reverse order, depending on the functionality involved. Further, more or fewer blocks and/or operations can be used with any of the message flow diagrams, scenarios, and flow charts discussed herein, and these message flow diagrams, scenarios, and flow charts can be combined with one another, in part or in whole.

A step, block, or operation that represents a processing of information can correspond to circuitry that can be configured to perform the specific logical functions of a herein-described method or technique. Alternatively or additionally, a step or block that represents a processing of information can correspond to a module, a segment, or a portion of program code (including related data). The program code can include one or more instructions executable by a processor for implementing specific logical operations or actions in the method or technique. The program code and/or related data can be stored on any type of computer-readable medium such as a storage device including RAM, a disk drive, a solid state drive, or another storage medium.

Moreover, a step, block, or operation that represents one or more information transmissions can correspond to information transmissions between software and/or hardware modules in the same physical device. However, other information transmissions can be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method comprising:
receiving, at a computing system, radio frequency interference (RFI) data and location data from one or more vehicles or infrastructure locations, the RFI data representing RFI parameters estimated by each vehicle during navigation or by each infrastructure location;
aggregating, based on the location data, the RFI data to generate a representation that indicates a power level and a frequency sub-band for RFI detected at one or more locations;
obtaining, at the computing system, a location from a vehicle; and
providing, by the computing system and to the vehicle, at least a portion of the representation based on the location of the vehicle.

2. The method of claim 1, further comprising:
determining the power levels, the frequency sub-bands, one or more lines of bearing, and waveform parameters for RFI detected at the one or more locations based on RFI data received from one or more vehicles navigating at the one or more locations; and
aggregating the RFI data to generate the representation further comprises:
generating the representation to further indicate the waveform parameters and one or more lines of bearing for RFI detected at the one or more locations.

3. The method of claim 1 or claim 2, further comprising:
receiving additional RFI data and location data from one or more vehicles or infrastructure locations;
modifying the representation based on the additional RFI data and location data; and
providing at least a portion of the modified representation to one or more vehicles.

4. The method of any preceding claim, wherein obtaining the location from the vehicle comprises:
receiving, from the vehicle, data specifying a route planned for the vehicle;
based on the route planned for the vehicle, identifying a portion of the representation that aligns with the route for the vehicle; and
providing the portion of the representation to the vehicle, and optionally wherein the method further comprises:
determining, based on the portion of the representation, mitigation instructions for the vehicle to use during navigation of the route, wherein the mitigation instructions depend on RFI parameters estimated by one or more vehicles positioned along the route; and
providing the mitigation instructions in addition to the portion of the representation to the vehicle.

5. The method of any preceding claim, wherein receiving RFI data and location data from one or more vehicles or infrastructure locations comprises:
receiving, from each vehicle, first RFI data representing parameters used by a vehicle radar system to transmit radar signals and location data representing a direction of travel of the vehicle.

6. The method of claim 5, wherein the first RFI data representing parameters used by the vehicle radar system to transmit radar signals comprises:
transmission waveform metadata representing waveform and frequency sub-band parameters used by the vehicle radar system to transmit radar signals.

7. The method of claim 6, wherein receiving RFI data and location data from the plurality of vehicles further comprises:
receiving second RFI data corresponding to external RFI detected by the vehicle radar system on each vehicle, wherein the external RFI originates from an emitter that is positioned remotely from the vehicle, and optionally wherein the second RFI data corresponding to external RFI signals comprises:
received waveform metadata representing waveform and frequency sub-band parameters estimated for the external RFI signals and location data representing an estimated position for the emitter that is positioned remotely from the vehicle.

8. The method of any preceding claim, wherein aggregating the RFI data into the representation comprises:
generating a RFI heat map, wherein the RFI heat map aligns the RFI data with roads used by the plurality of vehicles; and
estimating, based on trends in RFI data, a position of a stationary RFI source; and
wherein generating the RFI heat map comprises:
generating the RFI heat map such that the RFI heat map conveys the estimated position of the stationary RFI source.

9. The method of claim 8, wherein obtaining the location from the vehicle comprises:
receiving, from the vehicle, data specifying a route planned for the vehicle; and
wherein providing at least the portion of the representation comprises:
providing data representing respective portions of the RFI heat map based on the route planned for the vehicle, wherein the vehicle is configured to adjust radar operations or the route based on the data representing respective portions of the RFI heat map.

10. The method of claim 9, further comprising:
receiving additional RFI data and location data from one or more vehicles or infrastructure locations;
modifying the RFI heat map; and
identifying one or more trends for RFI data at one or more locations based on modifying the RFI heat map, wherein a trend indicates a change in RFI at a given location based on a particular time of day, and optionally wherein the method further comprises:
based on the one or more trends for RFI data at one or more locations, providing mitigation instructions to one or more vehicles traveling proximate the one or more locations.

11. The method of any of claims 1 to 3, further comprising:
receiving, from the vehicle, data specifying a route planned for the vehicle;
based on the route planned for the vehicle and the representation, determining a first frequency band for use by the vehicle during navigation of a first portion of the route and a second frequency band for use by the vehicle during navigation of a second portion of the route; and
providing mitigation instructions to the vehicle, wherein the mitigation instructions specify the first frequency band for use by the vehicle during navigation of the first portion of the route and the second frequency band for use by the vehicle during navigation of the second portion of the route.

12. The method of any preceding claim, further comprising:
obtaining map data representing positions of roads and buildings; and
wherein aggregating the RFI data into a representation based on the location data comprises:
associating the RFI data with the map data such that the representation conveys RFI intensity relative to roads and buildings.

13. A system comprising:
a computing device configured to:
receive radio frequency interference (RFI) data and location data from one or more vehicles or infrastructure locations, the RFI data representing RFI parameters estimated by each vehicle during navigation or by each infrastructure location;
aggregate, based on the location data, the RFI data to generate a representation that indicates a power level and a frequency sub-band for RFI detected at one or more locations;
obtain a location from a vehicle; and
provide, to the vehicle, at least a portion of the representation based on the location of the vehicle.

14. The system of claim 13, wherein:
the representation is a RFI heat map that uses a plurality of colors to visually convey the power level and the frequency sub-band at respective locations; and/or
the computing device is further configured to:
monitor RFI data relative to a RFI threshold for a given location, and
responsive to subsequent RFI data for the given location exceeding the RFI threshold for the given location, trigger an alert for the given location, optionally wherein the computing device is further configured to, based on the location for the vehicle corresponding to the given location, provide mitigation instructions to the vehicle.

15. A non-transitory computer-readable medium configured to store instructions, that when executed by a computing system comprising one or more processors, causes the computing system to perform the method of any one of claims 1 to 12.
